# EUROPEAN PATENT APPLICATION

(11) **EP 4 802 968 A1**
(43) Date of publication of application: **09.09.2026**
(21) Application number: 25164931.5
(22) Date of filing: 20.03.2025
(51) Int. Cl.: A47J 37/06

(54) **A KITCHEN APPLIANCE FOR COOKING**

(30) Priority: 03.03.2025 WO PCT/CN2025/080323
(71) Applicant: Versuni Holding B.V., 1082 MD Amsterdam (NL)
(72) Inventor: XU, Bo Jian, 1082 MD Amsterdam (NL); XIAO, Weimin, 1082 MD Amsterdam (NL); SUN, Wen, 1082 MD Amsterdam (NL); TAN, Jingwei, 1082 MD Amsterdam (NL); CHU, Kai, 1082 MD Amsterdam (NL)
(74) Representative: Vollering, Stefanus Franciscus Maria

(57) **Abstract**

There is provided a kitchen appliance for cooking, comprising a first cooking chamber (202) for holding food, a second cooking chamber (204) for holding food, a controller configured to control cooking processes for cooking food in the first cooking chamber (202) and the second cooking chamber (204) separately, a single camera (210) for imaging inside the first cooking chamber (202) and inside the second cooking chamber (204), and one or more optical components (212) arranged to direct light reflected from inside the first cooking chamber (202) to the single camera (210) for the single camera to image a food area inside the first cooking chamber (202) that is outside a field of view of the single camera (210).

## Description

### FIELD OF THE INVENTION

The disclosure relates to a kitchen appliance for cooking.

### BACKGROUND OF THE INVENTION

Kitchen appliances for cooking (also referred to herein more generally as kitchen appliances or cooking appliances) are widely used. Dual-chamber (or dual-basket) kitchen appliances for cooking are becoming increasingly popular because they enable different types of food to be processed (e.g. cooked) at the same time without interaction between the different food types in each chamber.

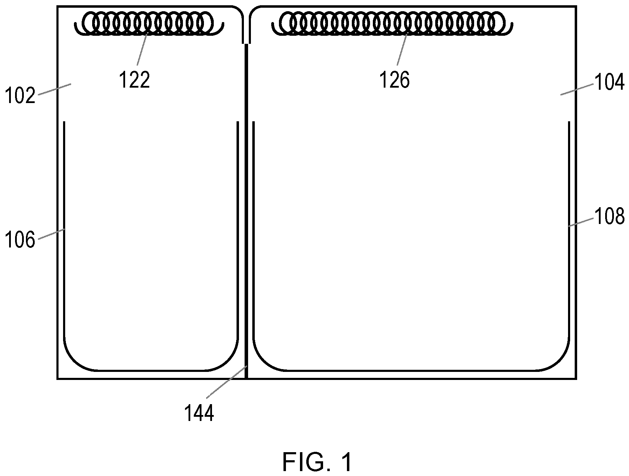

FIG. 1 shows a front view of a dual chamber (or dual-basket) kitchen appliance for cooking, such as a dual chamber air-frying cooker or air fryer (AF). A dual chamber AF can also be referred to as a dual zone AF, a dual basket AF, or a dual AF. The dual chamber kitchen appliance of FIG. 1 has a horizontal architecture in which cooking chambers 102, 104 are arranged horizontally relative to each other. Each cooking chamber 102, 104 comprises a basket 106, 108 for holding food. Each cooking chamber comprises a heater 122, 126 for heating that chamber. The cooking chambers 102, 104 are separated by a dividing wall 144.

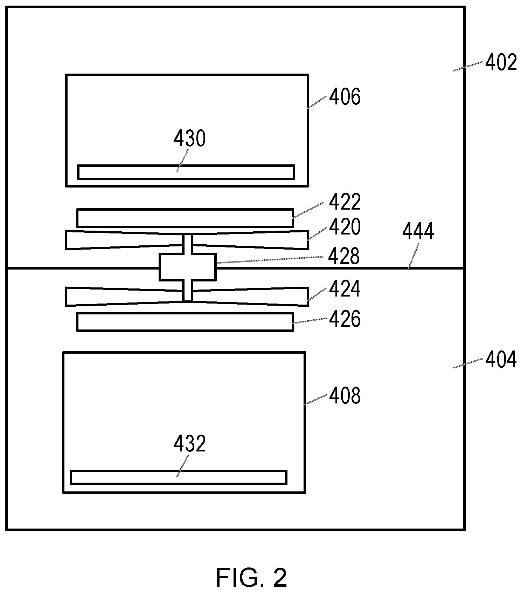

FIG. 2 shows a side view of another dual chamber (or dual-basket) kitchen appliance for cooking, such as a dual chamber air-frying cooker or AF. As a side view is shown, either the left or right side of FIG. 2 can be the back of the kitchen appliance. The dual chamber kitchen appliance of FIG. 2 has a vertical architecture in which cooking chambers 402, 404 are arranged vertically relative to each other. Each cooking chamber 402, 404 comprises a basket 406, 408 for holding food 430, 432. Each cooking chamber 402, 404 comprises a fan (e.g. comprising blades) 420, 424 and a heater 422, 426 for heating that chamber. For example, there may be two heaters 422, 426 and two fans 420, 424 between two baskets 406, 408. In this way, hot air flow can be evenly transferred to both baskets 406, 408. The fans 420, 424 can be driven by single motor 428. Alternatively, two separate motors may be used for the respective fans, so that fan speed may be more conveniently controlled. For example, there may be two separate motors for the respective baskets 406, 408. The cooking chambers 402, 404 are separated by a dividing wall 444.

Camera modules can be used in cooking appliances to enable visual functionality. For example, EP 4 309 550 A1 discloses that cameras can enable a food type to be recognized by food image recognition and cooking settings can be determined based on food image analysis results. Other applications of cameras include capturing images and/or video for identification of food amount, food distribution within a cooking chamber, and doneness level. Food images can be used for cooking process control, browning control, remote monitoring, burning prevention, and content for social media sharing.

Visual functionality will be widely deployed in future cooking appliances to offer visual monitoring of real-time food status and to enable visual-based cooking control. Camera-based smart-assisted cooking has been under investigation for years. It is therefore necessary to consider the integration of camera modules into dual chamber cooking appliances.

### SUMMARY OF THE INVENTION

For multi chamber cooking appliances (i.e. cooking appliances with multiple chambers), multiple cameras are usually required to obtain visual information for more than one cooking chamber (or basket) simultaneously. For example, for dual chamber (or dual-basket) cooking appliances, two cameras are usually required to obtain visual information from the two chambers (or baskets) simultaneously. However, each camera module included in a cooking appliance (along with the associated hardware and software configurations) increases the complexity, cost, and computational and power requirements of the cooking appliance.

It would thus be valuable to have an improvement that is aimed at addressing these limitations.

Therefore, according to an aspect of the disclosure, there is provided a kitchen appliance for cooking, comprising a first cooking chamber for holding food, a second cooking chamber for holding food, a controller configured to control cooking processes for cooking food in the first cooking chamber and the second cooking chamber separately, a single camera for imaging inside the first cooking chamber and inside the second cooking chamber, and one or more optical components arranged to direct light reflected from inside the first cooking chamber to the single camera for the single camera to image a food area inside the first cooking chamber that is outside a field of view of the single camera.

Thus, in the manner described above, an improved kitchen appliance for cooking is provided. The improved kitchen appliance uses optical components to direct light from inside a first cooking chamber to the single camera, thus enabling a single camera to image a food area inside the first cooking chamber that is outside a field of view of the single camera. In this way, the inside of the second chamber and the inside of the first cooking chamber (including the food area that would otherwise be outside the camera's field of view) can both be imaged by a single camera, thus reducing the need for further camera modules and reducing the complexity, cost, and computation and power requirements of the cooking appliance.

Herein, several methods of using one or more optical component (e.g. one or more mirrors and/or one or more lenses) to reduce the number of camera modules in a multi (e.g. dual) chamber cooking appliance (or, more specifically, a multi (e.g. dual) basket cooking appliance) are conceptualized. With the help of one or more well-designed optical components, light from multiple (e.g. two or more) cooking chambers (or baskets) can be sent into a single camera at the same time. A single camera module can therefore acquire visual information from multiple (e.g. two or more) cooking chambers simultaneously. The integration design can depend on the architecture of the cooking appliance (e.g. horizontal or vertical arrangement of cooking chamber). In the following, different methods are described regarding the different cooking appliance architectures.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
FIG. 1 is a schematic representation of a typical dual chamber cooking appliance with a horizontal architecture;
FIG. 2 is a schematic representation of a typical dual chamber cooking appliance with a vertical architecture;
FIGS. 3-4 are schematic representations of a dual chamber cooking appliance with a horizontal architecture in accordance with some embodiments; and
FIGS. 5-13 are schematic representations of a dual chamber cooking appliance with a vertical architecture in accordance with some embodiments.

### DETAILED DESCRIPTION OF EMBODIMENTS

The following detailed description of specific examples covered by the invention is intended for purposes of illustration only and not to limit the scope of protection as defined in the claims.

The disclosure relates to a kitchen appliance for cooking or, more specifically, for cooking food. The kitchen appliance for cooking can also be referred to as a cooking appliance. Herein, references to a kitchen appliance for cooking, or a cooking appliance, will be understood to mean any type of cooking appliance. Examples include, but are not limited to, an air-frying cooker (which may also be referred to as an air fryer), a microwave oven, a conventional oven, a convection oven, a steaming cooker (which may also be referred to as a steam cooker or food steamer), or any other type of cooking appliance.

There is provided a kitchen appliance for cooking, comprising a first cooking chamber for holding food, a second cooking chamber for holding food, a controller configured to control cooking processes for cooking food in the first cooking chamber and the second cooking chamber separately, a single camera for imaging inside the first cooking chamber and inside the second cooking chamber, and one or more optical components arranged to direct light reflected from inside the first cooking chamber to the single camera for the single camera to image a food area inside the first cooking chamber that is outside a field of view of the single camera.

Herein, a field of view (FOV) may also be referred to as an angle of view (AOV) or a viewing angle. It refers to the extent of an area that the single camera can image.

The one or more optical components may comprise an optical component having a curved surface that is arranged to direct the light reflected from inside the first cooking chamber to the single camera, and the optical component having the curved surface may be the first optical component in the path of the light reflected from inside the first cooking chamber. The one or more optical components may comprise one or more mirrors (e.g. one mirror, two mirrors, three mirrors, or any other number of mirrors) and/or one or more lenses (e.g. one lens, two lenses, three lenses, or any other number of lenses). Herein, a mirror may also be referred to as a reflective mirror, and a lens may also be referred to as a transparent lens.

The first cooking chamber may be located next to, above, or below the second cooking chamber.

The first cooking chamber may be located next to the second cooking chamber and the one or more optical components comprise a concave mirror may be arranged to direct the light reflected from inside the first cooking chamber to the single camera and direct light reflected from inside the second cooking chamber to the single camera for the single camera to image a food area inside the second cooking chamber that is outside the field of view of the single camera.

The first cooking chamber may be located next to the second cooking chamber, the one or more optical components may comprise a convex mirror arranged to direct the light reflected from inside the first cooking chamber to the single camera, and the single camera may be arranged to image a food area inside the second cooking chamber that is within the field of view of the single camera.

The first cooking chamber may be located above the second cooking chamber, and the one or more optical components may comprise a first mirror, a second mirror and a third mirror. The first mirror may be arranged to direct the light reflected from inside the first cooking chamber to the second mirror. The second mirror may be arranged to direct the light reflected from inside the first cooking chamber to the second mirror. The second mirror may be arranged to direct the light reflected from the first mirror the third mirror. The third mirror may be arranged to direct the light reflected from the second mirror to the single camera. The single camera may be arranged to image a food area inside the second cooking chamber that is within a field of view of the single camera. The first mirror may be a convex mirror, the second mirror may be a plane mirror, and the third mirror may be a plane mirror. Alternatively, the first mirror may be a convex mirror, the second mirror may be a plane mirror, and the third mirror may be a concave mirror.

The first cooking chamber may be located above the second cooking chamber, and the one or more optical components may comprise a first mirror and a second mirror. The first mirror may be arranged to direct the light reflected from inside the first cooking chamber to the second mirror. The second mirror may be arranged to direct the light reflected from the first mirror the single camera. The single camera may be arranged to image a food area inside the second cooking chamber that is within the field of view of the single camera. The first mirror may be a convex mirror, and the second mirror may be a plane mirror. Alternatively, the first mirror may be a convex mirror, and the second mirror may be a concave mirror.

The first cooking chamber may be located below the second cooking chamber, and the one or more optical components may comprise a first mirror and a second mirror. The first mirror may be arranged to direct the light reflected from inside the first cooking chamber to the second mirror. The second mirror may be arranged to direct the light reflected from the first mirror to the single camera. The single camera may be arranged to image a food area inside the second cooking chamber that is within the field of view of the single camera. The first mirror may be a convex mirror, and the second mirror may be a plane mirror.

The first cooking chamber may be located below the second cooking chamber, and the one or more optical components may comprise a first mirror, a second mirror and a third mirror. The first mirror may be arranged to direct the light reflected from inside the first cooking chamber to the second mirror. The second mirror may be arranged to direct the light reflected from the first mirror to the third mirror. The third mirror may be arranged to direct the light reflected from the second mirror to the single camera. The single camera may be arranged to image a food area inside the second cooking chamber that is within the field of view of the single camera. The first mirror may be a convex mirror, the second mirror may be a plane mirror, and the third mirror may be a plane mirror.

The first cooking chamber may be located below the second cooking chamber, and the one or more optical components may comprise a first concave lens and a second concave lens. The first concave lens may be arranged to direct the light reflected from inside the first cooking chamber to the single camera. The second concave lens may be arranged to direct the light reflected from inside the second cooking chamber to the single camera for the single camera to image a food area inside the second cooking chamber that is outside the field of view of the single camera.

The first cooking chamber may comprise a first removable basket for holding food. The second cooking chamber may comprise a second removable basket for holding food. The single camera may be for imaging inside the first removable basket and inside the second removable basket. The one or more optical components may be arranged to direct light from inside the first removable basket to the single camera for the single camera to image inside the first removable basket.

The kitchen appliance may be an air-frying cooker, a microwave oven, a conventional oven, a convection oven, or a steaming cooker.

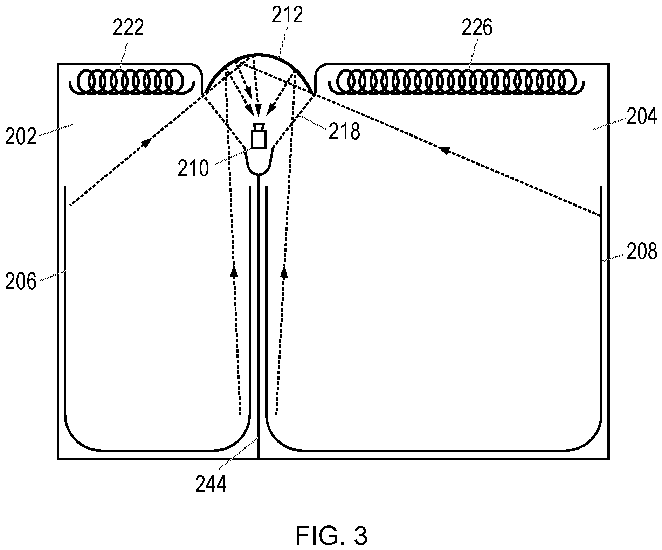

FIGS. 3-13 illustrate embodiments of a kitchen appliance for cooking, comprising a first cooking chamber 202, 302, 502, 602, 702, 802, 902, 1002, 1102, 1202, 1302 for holding food 530, 630, 730, 830, 930, 1030, 1130 and a second cooking chamber 204, 304, 504, 604, 704, 804, 904, 1004, 1104, 1204, 1304 for holding food 532, 632, 732, 832, 932, 1032, 1132. For example, the first cooking chamber 202, 302, 502, 602, 702, 802, 902, 1002, 1102, 1202, 1302 may comprise a first basket 206, 306, 506, 606, 706, 806, 906, 1006, 1106, 1206, 1306 for holding food 530, 630, 730, 830, 930, 1030, 1130 and the second cooking chamber 204, 304, 504, 604, 704, 804, 904, 1004, 1104, 1204, 1304 may comprise a second basket 208, 308, 508, 608, 708, 808, 908, 1008, 1108, 1208, 1308 for holding food 532, 632, 732, 832, 932, 1032, 1132. The first basket can be a first removable basket. The second basket can be a second removable basket. The first backet may comprise a first handle for use in removing the first basket from the first cooking chamber. The second basket may comprise a second handle for use in removing the second backet from the second cooking chamber. Herein, a basket may also be referred to as a cooking basket.

The first cooking chamber 202, 302, 502, 602, 702, 802, 902, 1002, 1102, 1202, 1302 may be located next to the second cooking chamber 204, 304, 504, 604, 704, 804, 904, 1004, 1104, 1204, 1304. This is referred to as a horizontal arrangement of cooking chambers, where the cooking chambers are arranged horizontally relative to each other (e.g. in a side-by-side arrangement). Alternatively, the first cooking chamber 202, 302, 502, 602, 702, 802, 902, 1002, 1102, 1202, 1302 may be located above, or below, the second cooking chamber 204, 304, 504, 604, 704, 804, 904, 1004, 1104, 1204, 1304. This is referred to as a vertical arrangement of cooking chambers, where the cooking chambers are arranged vertically relative to each other (e.g. in a stacked arrangement).

Although the kitchen appliances illustrated in FIGS. 3-13 comprise two cooking chambers, it will be understood that the kitchen appliance can comprise a plurality of cooking chambers (e.g. at least two cooking chambers, such as two, three, four, or more cooking chambers). Similarly, although the kitchen appliances illustrated in FIGS. 3-13 comprise two baskets, it will be understood that the kitchen appliance can comprise a plurality of baskets (e.g. at least two baskets, such as two, three, four, or more baskets). Each cooking chamber may comprise a single basket or a plurality of baskets (e.g. at least two baskets, such as two, three, four, or more baskets).

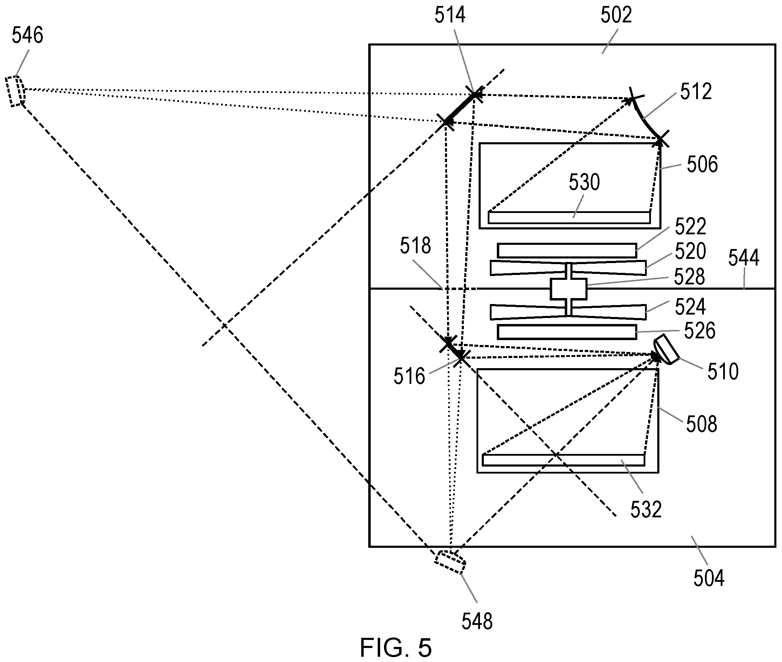

A food area can be defined as an area where (e.g. on which) food is to be placed in a cooking chamber or, more specifically, in a basket. For example, as illustrated by the location of the food 530, 532, 630, 632, 730, 732, 830, 832, 930, 932, 1030, 1032, 1130, 1132 in FIGS. 5-11, a first food area may be located at the base of the first basket 506, 606, 706, 806, 906, 1006, 1106 and a second food area may be located at the base of the second basket 508, 608, 708, 808, 908, 1008, 1108. Although food is not illustrated in FIGS. 3-4 and 12-13, it will be understood that a first food area may be located at the base of the first basket 206, 306, 1206, 1306 and a second food area may be located at the base of the second basket 208, 308, 1208, 1308 in these embodiments as well.

In the embodiments illustrated in FIGS. 3-13, one or both of the first cooking chamber 202, 302, 502, 602, 702, 802, 902, 1002, 1102, 1202, 1302 and the second cooking chamber 204, 304, 504, 604, 704, 804, 904, 1004, 1104, 1204, 1304 may comprise a fill level marker. For example, one or both of the first basket 206, 306, 506, 606, 706, 806, 906, 1006, 1106, 1206, 1306 and the second basket 208, 308, 508, 608, 708, 808, 908, 1008, 1108, 1208, 1308 may comprise a fill level marker. The fill level marker can, for example, be located on a sidewall of the first basket 206, 306, 506, 606, 706, 806, 906, 1006, 1106, 1206, 1306 and/or a sidewall of the second basket 208, 308, 508, 608, 708, 808, 908, 1008, 1108, 1208, 1308.

In the embodiments illustrated in FIGS. 3-13, each cooking chamber 202, 204, 302, 304, 502, 504, 602, 604, 702, 704, 802, 804, 902, 904, 1002, 1004, 1102, 1104, 1202, 1204, 1302, 1304 may be capable of maintaining its own cooking process parameters, such as any one or more of temperature, heat distribution, and air flow rate. For example, each cooking chamber may be sealed, insulated and/or ventilated). The first and second cooking chambers 202, 204, 302, 304, 502, 504, 602, 604, 702, 704, 802, 804, 902, 904, 1002, 1004, 1102, 1104 may be separated by a dividing wall 244, 344, 544, 644, 744, 844, 944, 1044, 1144.

Although not illustrated, the kitchen appliance comprises a controller configured to control cooking processes for cooking food in the first cooking chamber 202, 302, 502, 602, 702, 802, 902, 1002, 1102, 1202, 1302 and the second cooking chamber 204, 304, 504, 604, 704, 804, 904, 1004, 1104, 1204, 1304 separately. For example, inside each cooking chamber, there may be a heating element 222, 226, 322, 326, 522, 526, 622, 626, 722, 726, 822, 826, 922, 926, 1022, 1026, 1122, 1126, 1222, 1226, 1322, 1326 and optionally also a fan 520, 524, 620, 624, 720, 724, 820, 824, 920, 924, 1020, 1024, 1120, 1124, 1220, 1224, 1320, 1324. The controller may control the heating element 222, 226, 322, 326, 522, 526, 622, 626, 722, 726, 822, 826, 922, 926, 1022, 1026, 1122, 1126, 1222, 1226, 1322, 1326 and optionally also the fan 520, 524, 620, 624, 720, 724, 820, 824, 920, 924, 1020, 1024, 1120, 1124, 1220, 1224, 1320, 1324 in each chamber in order to control any one or more of a temperature, a heat distribution, and a rate of heat transfer to food in each chamber. The kitchen appliance may comprise a motor 528, 628, 728, 828, 928, 1028, 1128, 1236, 1234, 1335 for controlling the fan. The controller can be configured to cause the motor to control the fan.

The heating element 222, 226, 322, 326, 526, 626, 726, 826, 926, 1022, 1122, 1222, 1226, 1326 inside one or more of the cooking chambers 202, 204, 302, 304, 504, 604, 704, 804, 904, 1002, 1102, 1202, 1204, 1304 may be positioned at the top of that cooking chamber (e.g. above a food area inside that cooking chamber, such as above the basket 206, 208, 306, 308, 508, 608, 708, 808, 908, 1006, 1106, 1206, 1208, 1308 inside that cooking chamber), and optionally also the fan 524, 624, 724, 824, 924, 1020, 1120, 1220, 1224, 1324 inside one or more of the cooking chambers 504, 604, 704, 804, 904, 1002, 1102, 1202, 1204, 1304 may be positioned between the top of that cooking chamber and the heating element 526, 626, 726, 826, 926, 1022, 1122, 1222, 1226, 1326 inside that cooking chamber. This arrangement can be referred to herein as a first heating arrangement.

The heating element 522, 622, 722, 822, 922, 1026, 1126 inside one or more of the cooking chambers 502, 602, 702, 802, 902, 1004, 1104 may be positioned at the base of that cooking chamber (e.g. below a food area inside that cooking chamber, such as below the basket 506, 606, 706, 806, 906, 1008, 1108 inside that cooking chamber), and optionally also the fan 520, 620, 720, 820, 920, 1024, 1124 inside one or more of the cooking chambers 502, 602, 702, 804, 902, 1004, 1104 may be positioned between the base of that cooking chamber and the heating element 522, 622, 722, 822, 922, 1026, 1126 inside that cooking chamber. This arrangement can be referred to herein as a second heating arrangement.

In the first heating arrangement, the motor for controlling the fan inside one or more cooking chambers may be positioned on the outside of that cooking chamber, or inside that cooking chamber between the top of that cooking chamber and the fan inside that cooking chamber. In the second heating arrangement, the motor for controlling the fan inside one or more cooking chambers may be positioned on the outside of that cooking chamber, or inside that cooking chamber between the bottom of that cooking chamber and the fan inside that cooking chamber. In a combination of a first heating arrangement inside a bottom cooking chamber 504, 604, 704, 804, 904, 1002, 1102 and a second heating arrangement inside a top cooking chamber 502, 602, 702, 802, 902, 1004, 1104, the motor 528, 628, 728, 828, 928, 1028, 1128 for controlling the fans 520, 524, 620, 624, 720, 724, 820, 824, 920, 924, 1020, 1024, 1120, 1124 inside those two cooking chambers may be positioned between those two cooking chambers and optionally also at least partially within one or both of those cooking chambers.

The heating element 1322 inside one or more of the cooking chambers 1302 may be positioned at the back of that cooking chamber (e.g. next to a food area in that cooking chamber, such as next to the basket 1306 inside that cooking chamber), and optionally also the fan 1320 inside one or more of the cooking chambers 1302 may be positioned between the back of that cooking chamber and the heating element 1322 inside that cooking chamber. This arrangement can be referred to herein as a third heating arrangement. The third heating arrangement can reduce the overall height of the kitchen appliance.

In the third heating arrangement, the motor for controlling the fan inside one or more of the cooking chambers 1302 may be positioned between the back of that cooking chamber and the fan, or the motor for controlling the fan 1320 inside one or more cooking chambers may be positioned on the outside of that cooking chamber.

The heating element inside one or more of the cooking chambers may be positioned on a sidewall of that cooking chamber (e.g. next to a food area in that cooking chamber, such as next to the basket inside that cooking chamber), and optionally also the fan inside one or more of the cooking chambers may be positioned between the sidewall of that cooking chamber and the heating element inside that cooking chamber. This arrangement can be referred to herein as a fourth heating arrangement. The fourth heating arrangement can also reduce the overall height of the kitchen appliance.

In the fourth heating arrangement, the motor for controlling the fan inside one or more of the cooking chambers may be positioned between the sidewall of that cooking chamber and the fan, or the motor for controlling the fan inside one or more cooking chambers may be positioned on the outside of that cooking chamber.

The controller may separately control other actuators within each chamber in order to separately control other characteristics of cooking processes in the chambers such as any one or more of a moisture level, a heating rate, a cooling rate, and other characteristic(s).

The kitchen appliance comprises a single camera 210, 310, 510, 610, 710, 810, 910, 1010, 1110, 1210, 1310 for imaging inside the first cooking chamber 202, 302, 502, 602, 702, 802, 902, 1002, 1102, 1202, 1302 and inside the second cooking chamber 204, 304, 504, 604, 704, 804, 904, 1004, 1104, 1204, 1304. The single camera may be positioned inside the first cooking chamber, inside the second cooking chamber 304, 504, 604, 704, 804, 904, 1004, 1104, or outside the first and second cooking chambers 202, 204, 1202, 1204, 1302, 1304. The controller may be configured to automatically or semiautomatically control cooking processes in the first and second cooking chambers 202, 204, 302, 304, 502, 504, 602, 604, 702, 704, 802, 804, 902, 904, 1002, 1004, 1102, 1104, 1202, 1204, 1302, 1304, provide information to a user, and/or otherwise control the kitchen appliance based on information (for example, images and/or videos of food, and/or parameters extracted from images and/or videos of food) collected by the single camera 210, 310, 510, 610, 710, 810, 910, 1010, 1110, 1210, 1310.

The kitchen appliance comprises one or more optical components 212, 312, 512, 514, 516, 612, 616, 712, 716, 812, 816, 912, 914, 916, 1012, 1014, 1112, 1114, 1116, 1212, 1214, 1312, 1314 arranged to direct light reflected from inside the first cooking chamber 202, 302, 502, 602, 702, 802, 902, 1002, 1102, 1202, 1302 to the single camera 210, 310, 510, 610, 710, 810, 910, 1010, 1110, 1210, 1310 for the single camera to image a food area inside the first cooking chamber 202, 302, 502, 602, 702, 802, 902, 1002, 1102, 1202, 1302 that is outside a field of view of the single camera 210, 310, 510, 610, 710, 810, 910, 1010, 1110, 1210, 1310.

Herein, the field of view of the single camera 210, 310, 510, 610, 710, 810, 910, 1010, 1110, 1210, 1310 can refer to the area that is observable by the camera 210, 310, 510, 610, 710, 810, 910, 1010, 1110, 1210, 1310 (e.g. at any given moment). More specifically, the field of view of the single camera 210, 310, 510, 610, 710, 810, 910, 1010, 1110, 1210, 1310 can refer to the area that is observable to the single camera 210, 310, 510, 610, 710, 810, 910, 1010, 1110, 1210, 1310 (e.g. at any given moment) without the use of (or in the absence of) optical components external to the single camera, such as the one or more optical components 212, 312, 512, 514, 516, 612, 616, 712, 716, 812, 816, 912, 914, 916, 1012, 1014, 1112, 1114, 1116, 1212, 1214, 1312, 1314. The field of view of the camera 210, 310, 510, 610, 710, 810, 910, 1010, 1110, 1210, 1310 may be limited by the camera itself (for example, the sensor design and/or integrated optics) and/or by the presence of opaque parts of the kitchen appliance (e.g. internal walls and/or baskets).

The one or more optical components 212, 312, 512, 514, 516, 612, 616, 712, 716, 812, 816, 912, 914, 916, 1012, 1014, 1112, 1114, 1116, 1212, 1214, 1312, 1314 may comprise one or more mirrors (for example, one or more plane mirrors, one or more concave mirrors, and/or one or more convex mirrors), one or more lenses (for example, one or more convex mirrors, one or more concave mirrors, and/or one or more meniscus lenses), one or more prisms, and/or one or more other optical components. The mirrors referred to herein are reflective mirrors.

One or more windows 218, 318, 518, 618, 718, 818, 918, 1018, 1118 may be positioned in one or more walls 244, 344, 544, 644, 744, 844, 944, 1044, 1144 dividing the first and second cooking chambers 202, 204, 302, 304, 502, 504, 602, 604, 702, 704, 802, 804, 902, 904, 1002, 1004, 1102, 1104. The one or more windows 218, 318, 518, 618, 718, 818, 918, 1018, 1118 can be transparent. That is, the one or more windows 218, 318, 518, 618, 718, 818, 918, 1018, 1118 can be made from a transparent material, such as glass. The one or more windows 218, 318, 518, 618, 718, 818, 918, 1018, 1118 are flat (or substantially flat). That is, they do not have a curved surface. The one or more windows 218, 318, 518, 618, 718, 818, 918, 1018, 1118 can allow light to pass through (from one chamber to the other) so that the light can reach the relevant optical component(s) or the single camera 210, 310, 510, 610, 710, 810, 910, 1010, 1110. The one or more windows 218, 318, 518, 618, 718, 818, 918, 1018, 1118 may be used to allow light to pass from one chamber to the other without allowing air to escape from either cooking chamber.

Unlike the one or more optical components, 212, 312, 512, 514, 516, 612, 616, 712, 716, 812, 816, 912, 914, 916, 1012, 1014, 1112, 1114, 1116, 1212, 1214, 1312, 1314, the one or more windows 218, 318, 518, 618, 718, 818, 918, 1018, 1118 do not "direct" light reflected from inside the first cooking chamber 202, 302, 502, 602, 702, 802, 902, 1002, 1102, 1202, 1302 to the single camera for the single camera to image a food area inside the first cooking chamber 202, 302, 502, 602, 702, 802, 902, 1002, 1102, 1202, 1302 that is outside a field of view of the single camera. Instead, the one or more windows 218, 318, 518, 618, 718, 818, 918, 1018, 1118 merely allow light to pass through.

The top of the first basket 206, 306, 506, 606, 706, 806, 906, 1006, 1106, 1206, 1306 and the top of the second basket 208, 308, 508, 608, 708, 808, 908, 1008, 1108, 1208, 1308 may be open, or may comprise a removable lid. The removable lid can be made from a transparent material, such as glass, to allow light to pass through it.

Optical construction lines (i.e. lines representing the planes of mirrors, normal lines to mirrors, and lines between virtual cameras 546, 548, 648, 748, 1046, 1146, 1148 and single cameras 510, 610, 710, 810, 910, 1010, 1110) are illustrated as dashed lines in FIGS. 5-11. Light rays are represented by dashed arrows in FIGS. 3-13.

The single camera 210, 310, 510, 610, 710, 810, 910, 1010, 1110, 1210, 1310 may be arranged such that part of the food area inside the first cooking chamber 202, 302, 502, 602, 702, 802, 902, 1002, 1102, 1202, 1302 is outside the field of view of the single camera 210, 310, 510, 610, 710, 810, 910, 1010, 1110, 1210, 1310, or such that the entire food area inside the first cooking chamber 202, 302, 502, 602, 702, 802, 902, 1002, 1102, 1202, 1302 is outside the field of view of the single camera 210, 310, 510, 610, 710, 810, 910, 1010, 1110, 1210, 1310. The single camera 210, 310, 510, 610, 710, 810, 910, 1010, 1110, 1210, 1310 may be arranged such that part of a food area inside the second cooking chamber 204, 304, 504, 604, 704, 804, 904, 1004, 1104, 1204, 1304 is within the field of view of the single camera 210, 310, 510, 610, 710, 810, 910, 1010, 1110, 1210, 1310, or such that the entire food area inside the second cooking chamber 204, 304, 504, 604, 704, 804, 904, 1004, 1104, 1204, 1304 is within the field of view of the single camera 210, 310, 510, 610, 710, 810, 910, 1010, 1110, 1210, 1310.

The field of view of the single camera 210, 310, 510, 610, 710, 810, 910, 1010, 1110, 1210, 1310 may subtend a fixed angle. For example, the fixed angle may be in a range from 60 to 180 degrees, such as in a range from 70 to 170 degrees, such as in a range from 80 to 160 degrees, such as in a range from 90 to 150 degrees (e.g. an angle of 100 degrees). Thus, the camera may still receive some light sent in horizontally. A food area of the first cooking chamber 202, 302, 502, 602, 702, 802, 902, 1002, 1102, 1202, 1302 may be outside the field of view of the single camera 210, 310, 510, 610, 710, 810, 910, 1010, 1110, 1210, 1310, while a food area of the second cooking chamber 204, 304, 504, 604, 704, 804, 904, 1004, 1104, 1204, 1304 may be inside the field of view of the single camera 210, 310, 510, 610, 710, 810, 910, 1010, 1110, 1210, 1310. The field of view of the single camera 210, 310, 510, 610, 710, 810, 910, 1010, 1110, 1210, 1310 may include a "non-food" area, for example an area of the inside of the kitchen appliance which is not a food area and therefore may not be of interest to the camera/user/kitchen appliance. Therefore, in order to utilise the field of view of the single camera 210, 310, 510, 610, 710, 810, 910, 1010, 1110, 1210, 1310 more efficiently, a portion of the field of view of the single camera 210, 310, 510, 610, 710, 810, 910, 1010, 1110, 1210, 1310 may be used for receiving light via one or more optical components 212, 312, 512, 514, 516, 612, 616, 712, 716, 812, 816, 912, 914, 916, 1012, 1014, 1112, 1114, 1116, 1212, 1214, 1312, 1314 to enable the single camera 210, 310, 510, 610, 710, 810, 910, 1010, 1110, 1210, 1310 to image a food area of the first cooking chamber 202, 302, 502, 602, 702, 802, 902, 1002, 1102, 1202, 1302 that is outside the field of view of the single camera 210, 310, 510, 610, 710, 810, 910, 1010, 1110, 1210, 1310.

The one or more optical components may comprise an optical component 212, 312, 512, 612, 712, 812, 912, 1012, 1112, 1212, 1312 having a curved surface that is arranged to direct light reflected from inside the first cooking chamber 202, 302, 502, 602, 702, 802, 902, 1002, 1102, 1202, 1302 to the single camera 210, 310, 510, 610, 710, 810, 910, 1010, 1110, 1210, 1310. For example, the optical component having the curved surface may be a curved mirror (e.g. a concave, or convex mirror), a curved lens (e.g. a convex, concave, or meniscus lens), or another curved optical component. The optical component having the curved surface may be the first optical component in the path of the light reflected from inside the first cooking chamber 202, 302, 502, 602, 702, 802, 902, 1002, 1102, 1202, 1302. For example, light reflected from (e.g. food placed) inside the first cooking chamber 202, 302, 502, 602, 702, 802, 902, 1002, 1102, 1202, 1302 may reach the optical component having the curved surface first. That is, without previously having reached any other optical component. The component having the curved surface can be the first optical component in the path of the reflected light. For the purposes of this disclosure, the term "optical component" does not encompass a window.

The embodiments illustrated in FIGS. 3-13 will now be described in more detail.

FIG. 3 illustrates a front view of a kitchen appliance for cooking, comprising the first cooking chamber 202 for holding food and the second cooking chamber 204 for holding food, the single camera 210, and the one or more optical components 212. The first cooking chamber 202 may comprise the first basket 206 and the second cooking chamber 204 may comprise the second basket 208. The first and second cooking chambers 202, 204 may be separated by the dividing wall 244. The kitchen appliance may comprise the heating elements 222, 226, and windows 218.

As illustrated in FIG. 3, the first cooking chamber 202 may be located next to the second cooking chamber 204. The one or more optical components may comprise a concave mirror 212 arranged to direct light reflected from inside the first cooking chamber 202 (or, more specifically, the first basket 206) to the single camera 210 for the single camera 210 to image a food area inside the first cooking chamber 202 (or, more specifically, the first basket 206) that is outside a field of view of the single camera 210, and direct light reflected from inside the second cooking chamber 204 (or, more specifically, the second basket 208) to the single camera 210 for the single camera 210 to image a food area inside the second cooking chamber 204 (or, more specifically, the second basket 208) that is outside the field of view of the single camera 210.

The kitchen appliance in FIG. 3 can be referred to as a dual chamber cooking appliance with horizontal architecture. The kitchen appliance may have a dedicated motor and fan for each cooking chamber. That is, each cooking chamber may have its own motor and fan.

The single camera 210 may be fixed between (e.g. fixed in the middle of both) cooking chambers 202, 204 (or, more specifically, the baskets 206, 208). The single camera 210 may be oriented towards both cooking chambers 202, 204 (or, more specifically, both baskets 206, 208), such that the inside of each cooking chamber 202, 204 (or, more specifically, each basket 206, 208) can be viewed simultaneously via the single camera 210. However, due to the limited viewing angle of the single camera 210, certain food areas inside the first and/or second cooking chambers 202, 204 (especially when the cooking chambers 202, 204 are filled to a high level with food) may not be visible via the single camera 210.

FIG. 3 illustrates a solution to this problem, which is to use a curved mirror (or, more specifically, a concave mirror) 212 to collect light from a food area inside each cooking chamber 202, 204 (or, more specifically, each basket 206, 208) that is outside the field of view of the camera (e.g. the entire base or entire inside of each cooking chamber or basket) and reflect it to the single camera 210. As illustrated in FIG. 3, the single camera 210 may be mounted (or oriented) to face the curved mirror 212. For example, the single camera 210 may be mounted (or oriented) to face upward (e.g. away from the base of the cooking chambers 202, 204 or, more specifically, the baskets 206, 208). In this way, the curved mirror 212 can collect light reflected from inside each of the cooking chambers 202, 204 (or, more specifically, each of the baskets 206, 208, such as from a food area on the base of each of the baskets 206, 208 where food is to be placed). Software may be used to improve object orientation and/or size in captured images and/or videos.

As illustrated in FIG. 3, the single camera 210 and/or the curved mirror 212 may be positioned in between the first and second cooking chambers 202, 204. The single camera 210 may be positioned vertically below the curved mirror 212. The single camera 210 may face vertically upward so as to be able to receive light reflected from the curved mirror 212, e.g. without allowing air to escape from either of the cooking chambers 202, 204.

The windows 218 may allow light to pass from the first and second cooking chamber 202, 204 to the curved mirror 212 so that the curved mirror 212 may reflect this light to the single camera 210, e.g. without allowing air to escape from either chamber.

The single camera 210 may be oriented at an angle in a range from 60 to 120 degrees from a horizontal plane, such as at an angle in a range from 65 to 115 degrees from the horizontal plane, such as an angle in a range from 70 to 110 degrees from the horizontal plane, such as an angle in a range from 75 to 105 degrees from the horizontal plane, such as an angle in a range from 80 to 100 degrees from a horizontal plane, such as an angle in a range from 85 to 95 degrees from a horizontal plane. For example, the single camera 210 may be oriented at an angle of 90 degrees from the horizontal plane.

The curved mirror 212 may be oriented at an angle in a range from -60 to - 120 degrees, such as at an angle in a range from -65 to -115 degrees from the horizontal plane, such as an angle in a range from -70 to -110 degrees from the horizontal plane, such as an angle in a range from -75 to -105 degrees from the horizontal plane, such as an angle in a range from -80 to -100 degrees from a horizontal plane, such as an angle in a range from -85 to -95 degrees from a horizontal plane. For example, the curved mirror 212 may be oriented at an angle of -90 degrees from the horizontal plane.

The horizontal plane can be defined as a plane parallel to the base of the kitchen appliance. The angles of orientation can be measured counterclockwise from a starting angle of 0 degrees from the horizontal plane.

The heating elements 222, 226 are illustrated as being in the first heating arrangement in FIG. 2. However, it will be understood that one or both of the heating elements 222, 226 may alternatively be in the second, third, or fourth heating arrangement.

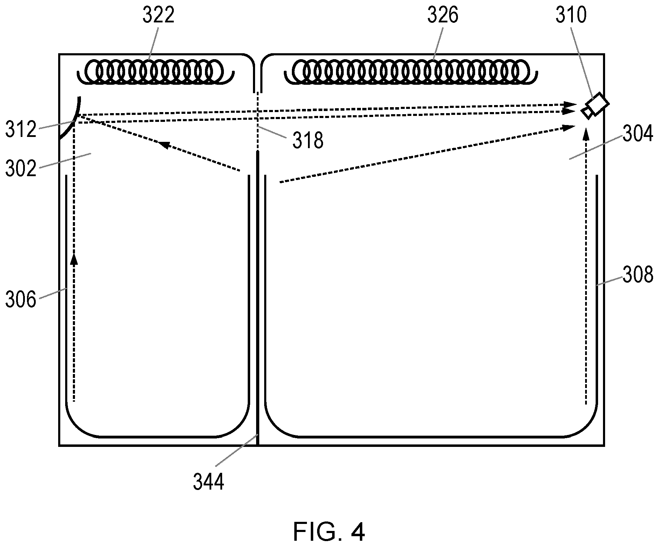

FIG. 4 illustrates a front view of a kitchen appliance for cooking comprising, the first cooking chamber 302 for holding food, the second cooking chamber 304 for holding food, the single camera 310, and the one or more optical components 312. The first cooking chamber 302 may comprise the first basket 306 and the second cooking chamber 304 may comprise the second basket 308. The first and second cooking chambers 302, 304 may be separated by the dividing wall 344. The kitchen appliance may comprise the heating elements 322, 326, and window 318.

As illustrated in FIG. 4, the first cooking chamber 302 may be located next to the second cooking chamber 304. The one or more optical components may comprise a mirror 312 arranged to direct light reflected from inside the first cooking chamber 302 (or, more specifically, the first basket 306) to the single camera 310 for the single camera 310 to image a food area inside the first cooking chamber 302 (or, more specifically, the first basket 306) that is outside a field of view of the single camera 310. The mirror 312 may be a convex mirror. The single camera 310 may be arranged to image a food area inside the second cooking chamber 304 (or, more specifically, the second basket 308) that is within the field of view of the single camera 310. That is, the single camera 310 may be arranged so that it can directly image a food area inside the second cooking chamber 304 (or, more specifically, the second basket 308) without the use of optical components to guide light to the single camera 310, while simultaneously "indirectly" imaging a food area in the first cooking chamber 302 (or, more specifically, the first basket 306) via the mirror 312. Thus, the single camera 310 is oriented towards one basket 308 so that no mirror is needed to guide light from that basket to the single camera 310. Whereas, the mirror 312 is used to reflect the light from the other basket 306 to the single camera 310. The window 318 may be positioned in the dividing wall 344 between the first and second cooking chambers 302, 304 in order to allow light reflected from the mirror 312 to reach the camera 310, e.g. without allowing air to escape from either cooking chamber.

As illustrated in FIG. 4, only one mirror may be needed. "Direct" imaging of the second basket 308 by the single camera 310 (i.e. without using optical components to direct the light reflected from the second basket 308 to the single camera 310) may provide improved image quality of a food area inside the second basket 308. The second basket 308 is also closer to the single camera 310, which can further improve the image quality. Software may be used to improve the images obtained from light that is reflected from the first basket 306 to the single camera 310 via the mirror 312, for example to improve object orientation and/or size in collected images and/or videos.

As illustrated in FIG. 4, the single camera 310 may be positioned inside the second cooking chamber 304. The mirror 312 may be positioned in the first cooking chamber 302. The mirror 312 may be positioned above a food area in the first cooking chamber 302, for example above a top edge of the first basket 306. The mirror 312 may be positioned at an angle so as to reflect light from inside the first cooking chamber 302 or, more specifically, the first basket 306 (for example, from food placed inside the first basket 306) in a horizontal direction. The first camera 310 may be positioned horizontally level with the mirror 312 so as to receive light reflected from the mirror 312.

The window 318 may allow light to pass from the first cooking chamber 302 to the second cooking chamber 304, e.g. without allowing air to escape either of the cooking chambers 302, 304. The window 318 allows light reflected from the first optical component to reach the single camera 310. As illustrated in FIG. 4, the window 318 may be positioned horizontally level with the single camera 310 and the mirror 312.

The single camera 310 may be oriented at an angle in a range from -90 to - 180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 310 may be oriented at an angle of -150 degrees from the horizontal plane.

The mirror 312 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane, such as an angle in a range from -20 to -70 degrees from a horizontal plane, such as an angle in a range from -25 to -65 degrees from a horizontal plane, such as an angle in a range from -30 to -60 degrees from a horizontal plane, such as an angle in a range from -35 to -55 degrees from a horizontal plane. For example, the mirror 312 may be oriented at an angle of -45 degrees from the horizontal plane.

The horizontal plane can be defined as a plane parallel to the base of the kitchen appliance. The angles of orientation can be measured counterclockwise from a starting angle of 0 degrees from the horizontal plane.

The heating elements 322, 326 are illustrated as being in the first heating arrangement in FIG. 4. However, it will be understood that one or both of the heating elements 322, 326 may alternatively be in the second, third, or fourth heating arrangement.

FIG. 5 illustrates a front view of a kitchen appliance for cooking, comprising the first cooking chamber 502, the second cooking chamber 504, the single camera 510, and the one or more optical components 512, 514, 516. The first cooking chamber 502 may comprise the first basket 506 for holding food 530 and the second cooking chamber 504 may comprise the second basket 508 for holding food 532. The first and second cooking chambers 502, 504 may be separated by the dividing wall 544. Each cooking chamber 502, 504 may comprise a heating element 522, 526 and optionally also a fan 520, 524. The fans 520, 524 may be powered by a single motor 528 or by separate motors.

As illustrated in FIG. 5, the first cooking chamber 502 may be located above the second cooking chamber 504. The one or more optical components may comprise a first mirror 512, a second mirror 514, and a third mirror 516. The first mirror may be arranged to direct light reflected from inside the first cooking chamber 502 to the second mirror 514, the second mirror 514 may be arranged to direct light reflected from the first mirror 512 to the third mirror 516, and the third mirror 516 may be arranged to direct the light reflected from the second mirror 514 to the single camera 510. The single camera 510 may be arranged to image a food area inside the second cooking chamber 504 that is within a field of view of the single camera 510.

The single camera 510 may be oriented to view a food area inside the second cooking chamber 504 or, more specifically, inside the second basket 508. Thus, food 532 in the second basket 508 can be directly seen by the single camera 510. The single camera 510 is oriented such that most, if not all, of the food 532 can be observed. The dotted lines extending from the food 532 to the single camera 510 in FIG. 5 illustrate light that may be reflected from the food 532 and captured by the single camera 510. As illustrated in FIG. 5, all light reflected from the food 532 may be captured by the single camera 510.

The dotted lines extending from the food 530 to the first optical component 512, from the first optical component 512 to the second optical component 514, from the second optical component 514 to the third optical component 516, and from the third optical component 516 to the single camera 510 illustrate light reflected from the food 530 that is reflected by the optical components 512, 514, 516 and captured by the single camera 510.

FIG. 5 shows a first virtual camera 546 and a second virtual camera 548 The first virtual camera 546 is based on the plane of the second optical component 514. The first virtual camera 546 illustrates the effective view that the single camera 510 has of the first optical component 512. The second virtual camera 548 is based on the plane of the third optical component 516. The second virtual camera 548 shows the effective view that the single camera 510 has of the second optical component 514. As illustrated in FIG. 5, the plane of the second optical component 514 may be perpendicular to the straight line between the first virtual camera 546 and the second virtual camera 548. The plane of the third optical component 516 may be perpendicular to the line between the second virtual camera 548 and the single camera 510.

As illustrated in FIG. 5, the single camera 510 may be positioned inside the second cooking chamber 504. The optical components 512, 514, 516 may be positioned inside different cooking chambers. For example, as illustrated in FIG. 5, the first optical component 512 and the second optical component 514 may be positioned in the first cooking chamber 502 and the third optical component 516 may be positioned in the second cooking chamber 504.

The first optical component 512 may be positioned above a food area, for example, above a top edge of the first basket 506. The first optical component 512 may be positioned at an angle so as to reflect light reflected from inside the first cooking chamber 502 or, more specifically, the first basket 506 (for example, from food 530 inside the first basket 506) in a horizontal direction.

The second optical component 514 may be positioned horizontally level with the first optical component 512 so as to receive light reflected from the first optical component 512. The second optical component 514 may be positioned so that it is not directly vertically above the first basket 506 (for example, so that it is not directly vertically above a food area at which food 530 is to be placed in the first basket 506). The second optical component 514 may be positioned at an angle so as to reflect light reflected from the first optical component 512 in a vertically downward direction.

The third optical component 516 may be positioned vertically below the second optical component 514 so as to receive light reflected in a vertically downward direction from the second optical component 514. Thus, the third optical component 516 may be positioned so that it is not directly vertically below the first basket 506 (for example, so that it is not directly vertically below a food area at which food 530 is to be placed in the first basket 506). The third optical component 516 may be positioned at an angle so as to reflect light reflected from the second optical component 512 in a horizontal direction.

As illustrated in FIG. 5, the window 518 may allow light to pass from the first cooking chamber 502 to the second cooking chamber 504, e.g. without allowing air to escape. The window 518 allows light reflected from the second optical component 514 to reach the third optical component 516 so that the third optical component 516 may reflect this light to the single camera 510. As illustrated in FIG. 5, the window 518 may be positioned vertically below the second optical component 514 and vertically above the third optical component 516.

The single camera 510 may be positioned horizontally level with the third optical component 516 so as to receive light reflected in a horizontal direction from the third optical component 516. The single camera 510 may be positioned at an angle so as to be able to directly image a food area inside the second cooking chamber 504 (or, more specifically, a food area at which food 532 is to be placed inside the second basket 508) without the use of optical components to guide light to the single camera 510, while simultaneously "indirectly" imaging a food area in the first cooking chamber 502 (or, more specifically, a food area at which food 530 is to be placed inside the first basket 506) via the optical components 512, 514, 516.

As illustrated in FIG. 5, the first optical component 512 may be a convex mirror, the second optical component 514 may be a plane mirror and the third optical component 516 may be a plane mirror. The flat mirror 516 may reflect light horizontally into the single camera 510. The light may be reflected by the plane mirror 514 mounted in the top left part of the first chamber 502. The plane mirror 514 may receive light from the convex mirror 512 mounted in the top right part of the first chamber 502. The convex mirror 512 may reflect light that is reflected from the food 530.

Using a convex mirror 512 instead of a flat mirror as the first optical component 512 may enable the first optical component 512 to be smaller and/or fixed in a lower position relative to the bottom of the first cooking chamber 502 (i.e. closer to the food 530). The convex mirror 512 can still reflect light from a wide food area or the entire food area (for example, in order to reflect light from all of the food 530 in the first basket 506).

The single camera 510 may be oriented at an angle in a range from -90 to - 180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 510 may be oriented at an angle of -150 degrees from the horizontal plane.

The mirror 512 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane, such as an angle in a range from -120 to -150 degrees from a horizontal plane, such as an angle in a range from -125 to -145 degrees from a horizontal plane, such as an angle in a range from -130 to -140 degrees from a horizontal plane. For example, the mirror 512 may be oriented at an angle of -135 degrees from the horizontal plane.

The mirror 514 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane, such as an angle in a range from -20 to -70 degrees from a horizontal plane, such as an angle in a range from -25 to -65 degrees from a horizontal plane, such as an angle in a range from -30 to -60 degrees from a horizontal plane, such as an angle in a range from -35 to -55 degrees from a horizontal plane. For example, the mirror 514 may be oriented at an angle of -45 degrees from the horizontal plane.

The mirror 516 may be oriented at an angle in a range from 0 to 90 degrees, such as at an angle in a range from 5 to 85 degrees from the horizontal plane, such as an angle in a range from 10 to 80 degrees from the horizontal plane, such as an angle in a range from 15 to 75 degrees from the horizontal plane, such as an angle in a range from 20 to 70 degrees from a horizontal plane, such as an angle in a range from 25 to 65 degrees from a horizontal plane, such as an angle in a range from 30 to 60 degrees from a horizontal plane, such as an angle in a range from 35 to 55 degrees from a horizontal plane. For example, the mirror 516 may be oriented at an angle of 45 degrees from the horizontal plane.

The horizontal plane can be defined as a plane parallel to the base of the kitchen appliance. The angles of orientation can be measured counterclockwise from a starting angle of 0 degrees from the horizontal plane.

In FIG. 5, the heating element 526 and fan 524 are illustrated as being in the first heating arrangement, and the heating element 522 and fan 520 are illustrated as being in the second heating arrangement. However, it will be understood that heating element 526 and fan 524 may alternatively be in the second, third or fourth heating arrangement, and/or the heating element 522 and fan 520 may alternatively be in the first, third or fourth heating arrangement.

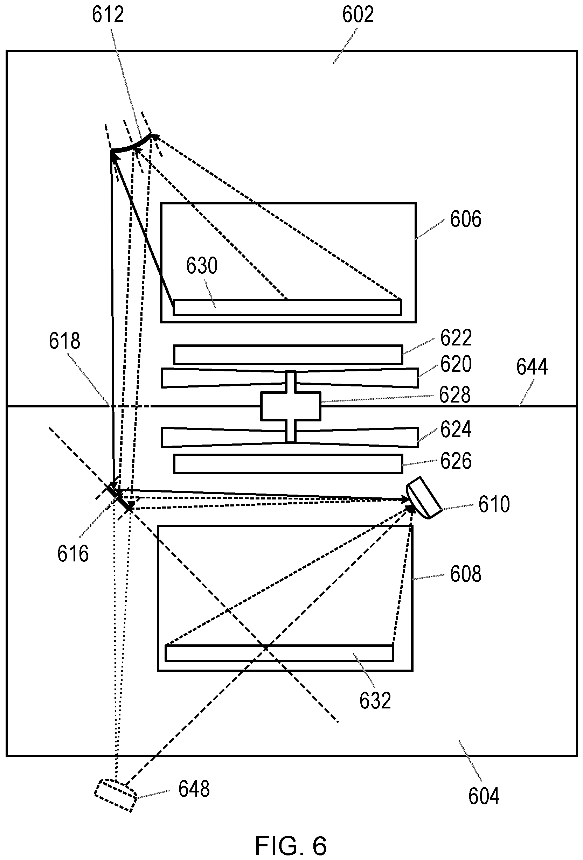

FIG. 6 illustrates a front view of a kitchen appliance for cooking, comprising the first cooking chamber 602, the second cooking chamber 606, the single camera 610, and the one or more optical components 612, 616. The first cooking chamber 602 may comprise the first basket 606 for holding food 630 and the second cooking chamber 604 may comprise the second basket 608 for holding food 632. The first and second cooking chambers 602, 604 may be separated by the dividing wall 644. Each cooking chamber may comprise a heating element 622, 626 and optionally also a fan 620, 624. The fans 620, 624 may be powered by a single motor 628 or by separate motors.

As illustrated in FIG. 6, the first cooking chamber 602 may be located above the second cooking chamber 604. The one or more optical components may comprise a first mirror 612 and a second mirror 6161. The first mirror may be arranged to direct light reflected from inside the first cooking chamber 602 to the second mirror 616. The second mirror may be arranged to direct light reflected from the first mirror 612 to the single camera. The single camera 610 may be arranged to image a food area inside the second cooking chamber 604 that is within the field of view of the single camera 610.

The single camera 610 may be oriented to view a food area inside the second cooking chamber 604 or, more specifically, inside the second basket 608. Thus, food 632 in the second basket 608 can be directly seen by the single camera 610. The single camera 610 is oriented such that most, if not all, of the food 632 can be observed. The dotted lines extending from the food 632 to the single camera 610 in FIG. 6 illustrate light that may be reflected from the food 632 and captured by the single camera 610. As illustrated in FIG. 6, all light reflected from the food 632 may be captured by the single camera 610.

The dotted lines extending from the food 630 to the first mirror 612, from the first mirror 612 to the second mirror 616, and from the second mirror 616 to the single camera 610 illustrate light reflected from the food 630 that is reflected by the first and second mirrors 612, 616 and captured by the single camera 610.

FIG. 6 shows a first virtual camera 648. The first virtual camera 648 is based on the plane of the second mirror 616. The first virtual camera 648 illustrates the effective view that the single camera 610 has of the first mirror 612. As illustrated in FIG. 6, the plane of the second mirror 616 may be perpendicular to the straight line between the first virtual camera 648 and the single camera 610.

As illustrated in FIG. 6, the single camera 610 may be positioned inside the second cooking chamber 604. The first and second mirrors 612, 616 may be positioned in different cooking chambers. For example, as illustrated in FIG. 6, the first mirror 612 may be positioned in the first cooking chamber 602 and the second mirror 616 may be positioned in the second cooking chamber 604. The first mirror 612 may be positioned above a food area, but not directly vertically above the food area, for example above a top edge of the first basket 606, but not directly vertically above the first basket 606 or food 630. The first mirror 612 may be positioned at an angle so as to reflect light reflected from inside the first cooking chamber 602 or, more specifically, the first basket 606 (for example, from food 630 inside the first basket 606) in a vertically downward direction.

The second mirror 616 may be positioned vertically below the first mirror 612 so as to receive light reflected in a vertically downward direction from the first mirror 612. Thus, the second mirror 616 may be positioned so that it is not directly vertically below the first basket 606 (for example, so that it is not directly vertically below a food area at which food 630 is to be placed in the first basket 606). The second mirror 616 may be positioned at an angle so as to reflect light reflected from the first mirror 612 in a horizontal direction.

As illustrated in FIG. 6, the window 618 may allow light to pass from the first cooking chamber 602 to the second cooking chamber 504, e.g. without allowing air to escape. The window 618 allows light reflected from the first mirror 612 to reach the second mirror 616 so that the second mirror 616 may reflect this light to the single camera 610. As illustrated in FIG. 6, the window 618 may be positioned vertically below the first mirror 614 and vertically above the second mirror 616.

The single camera 610 may be positioned horizontally level with the second mirror 616 so as to receive light reflected in a horizontal direction from the second mirror 616. The single camera 610 may be positioned at an angle so as to be able to directly image a food area inside the second cooking chamber 604 (or, more specifically, a food area at which food 632 is to be placed inside the second basket 608) without the use of optical components to guide light to the single camera 610, while simultaneously "indirectly" imaging a food area in the first cooking chamber 602 (or, more specifically, a food area at which food 630 is to be placed inside the first basket 606) via the mirrors 612, 616.

The single camera 610 may be oriented at an angle in a range from -90 to - 180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 610 may be oriented at an angle of -150 degrees from the horizontal plane.

The mirror 612 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane, such as an angle in a range from -20 to -70 degrees from a horizontal plane, such as an angle in a range from -25 to -65 degrees from a horizontal plane, such as an angle in a range from -30 to -60 degrees from a horizontal plane, such as an angle in a range from -35 to -55 degrees from a horizontal plane. For example, the mirror 612 may be oriented at an angle of -45 degrees from the horizontal plane.

The mirror 616 may be oriented at an angle in a range from 0 to 90 degrees, such as at an angle in a range from 5 to 85 degrees from the horizontal plane, such as an angle in a range from 10 to 80 degrees from the horizontal plane, such as an angle in a range from 15 to 75 degrees from the horizontal plane, such as an angle in a range from 20 to 70 degrees from a horizontal plane, such as an angle in a range from 25 to 65 degrees from a horizontal plane, such as an angle in a range from 30 to 60 degrees from a horizontal plane, such as an angle in a range from 35 to 55 degrees from a horizontal plane. For example, the mirror 616 may be oriented at an angle of 45 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 626 and fan 624 are illustrated as being in the first heating arrangement and the heating element 622 and fan 620 are illustrated as being in the second heating arrangement in FIG. 6. However, it will be understood that heating element 626 and fan 624 may alternatively be in the second, third or fourth heating arrangement, and/or the heating element 622 and fan 620 may alternatively be in the first, third or fourth heating arrangement.

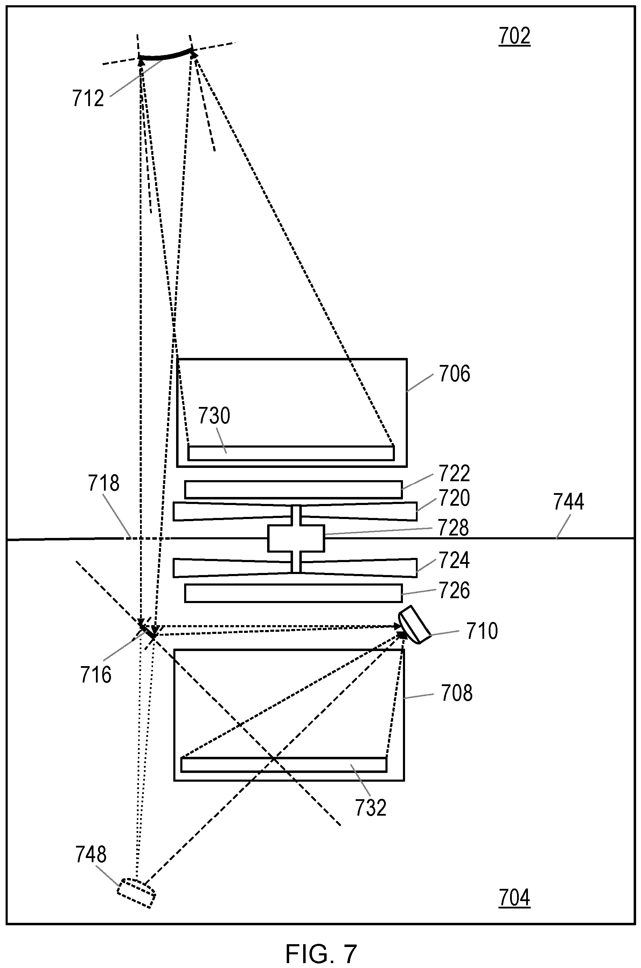

FIG. 7 illustrates a front view of a kitchen appliance for cooking, comprising the first cooking chamber 702, the second cooking chamber 704, the single camera 710, and the one or more optical components 712, 716. The first cooking chamber 702 may comprise the first basket 706 for holding food 730 and the second cooking chamber 704 may comprise the second basket 708 for holding food 732. The first and second cooking chambers 702, 704 may be separated by the dividing wall 744. Each cooking chamber 702, 704 may comprise a heating element 722, 726 and optionally also a fan 720, 724. The fans 720, 724 may be powered by a single motor 728 or by separate motors.

As illustrated in FIG. 7, the first cooking chamber 702 may be located above the second cooking chamber 704. The one or more optical components may comprise a first mirror 712 and a second mirror 716. The first mirror may be arranged to direct light reflected from inside the first cooking chamber 702 to the second mirror 714. The second mirror 714 may be arranged to direct light reflected from the first mirror 712 to the single camera 710.

The single camera 710 may be oriented to view a food area inside the second cooking chamber 704 or, more specifically, inside the second basket 708. Thus, food 732 in the second basket 708 can be directly seen by the single camera 710. The single camera 710 is oriented such that most, if not all, of the food 732 can be observed. The dotted lines extending from the food 732 to the single camera 710 in FIG. 7 illustrate light that may be reflected from the food 732 and captured by the single camera 710. As illustrated in FIG. 7, all light reflected from the food 732 may be captured by the single camera 710.

The dotted lines extending from the food 730 to the first mirror 712, from the first mirror 712 to the second mirror 716, and from the second mirror 716 to the single camera 710 illustrate light reflected from the food 730 that is reflected by the first and second mirrors 712, 716 and captured by the single camera 710.

FIG. 7 shows a first virtual camera 748. The first virtual camera 748 is based on the plane of the second mirror 716. The first virtual camera 748 illustrates the effective view that the single camera 710 has of the first mirror 712. As illustrated in FIG. 7, the plane of the second mirror 716 may be perpendicular to the straight line between the first virtual camera 748 and the single camera 710.

As illustrated in FIG. 7, the single camera 710 may be positioned inside the second cooking chamber 704. The first and second mirrors 712, 716 may be positioned in different cooking chambers. For example, as illustrated in FIG. 7, the first mirror 712 may be positioned in the first cooking chamber 702 and the second mirror 716 may be positioned in the second cooking chamber 704.

The first mirror 712 may be positioned so that it is above a food area but not directly vertically above the food area, for example above a top edge of the first basket 706 but not directly vertically above the first basket 706 or food 730. The first mirror 712 may be positioned at an angle so as to reflect light reflected from inside the first cooking chamber 702 or, more specifically, the first basket 706 (for example, from food 730 inside the first basket 706) in a vertically downward direction.

The second mirror 716 may be positioned vertically below the first mirror 712 so as to receive light reflected in a vertically downward direction from the first mirror 712. Thus, the second mirror 716 may be positioned so that it is not directly vertically below the first basket 706 (for example, so that it is not directly vertically below a food area at which food 730 is to be placed in the first basket 706). The second mirror 716 may be positioned at an angle so as to reflect light reflected from the first mirror 712 in a horizontal direction.

As illustrated in FIG. 7, the window 718 may allow light to pass from the first cooking chamber 702 to the second cooking chamber 704, e.g. without allowing air to escape. The window 718 allows light reflected from the first mirror 712 to reach the second mirror 716 so that the second mirror 716 may reflect this light to the single camera 710. As illustrated in FIG. 7, the window 718 may be positioned vertically below the first mirror 714 and vertically above the second mirror 716.

The single camera 710 may be positioned horizontally level with the second mirror 716 so as to receive light reflected in a horizontal direction from the second mirror 716. The single camera 710 may be positioned at an angle so as to be able to directly image a food area inside the second cooking chamber 704 (or, more specifically, a food area at which food 732 is to be placed inside the second basket 708) without the use of optical components to guide light to the single camera 710, while simultaneously "indirectly" imaging a food area in the first cooking chamber 702 (or, more specifically, a food area at which food 730 is to be placed inside the first basket 706) via the mirrors 712, 716.

The single camera 710 may be oriented at an angle in a range from -90 to - 180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 710 may be oriented at an angle of -150 degrees from the horizontal plane.

The mirror 712 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane. For example, the mirror 712 may be oriented at an angle of -70 degrees from the horizontal plane.

The mirror 716 may be oriented at an angle in a range from 0 to 90 degrees, such as at an angle in a range from 5 to 85 degrees from the horizontal plane, such as an angle in a range from 10 to 80 degrees from the horizontal plane, such as an angle in a range from 15 to 75 degrees from the horizontal plane, such as an angle in a range from 20 to 70 degrees from a horizontal plane, such as an angle in a range from 25 to 65 degrees from a horizontal plane, such as an angle in a range from 30 to 60 degrees from a horizontal plane, such as an angle in a range from 35 to 55 degrees from a horizontal plane. For example, the mirror 716 may be oriented at an angle of 45 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 726 and fan 724 are illustrated as being in the first heating arrangement and the heating element 722 and fan 720 are illustrated as being in the second heating arrangement in FIG. 7. However, it will be understood that heating element 726 and fan 724 may alternatively be in the second, third or fourth heating arrangement, and/or the heating element 722 and fan 720 may alternatively be in the first, third or fourth heating arrangement.

As illustrated in FIGS. 6 and 7, the first mirror 612, 712 may be a convex mirror and the second mirror may be a plane mirror 616, 716.

**In** embodiments where food 630, 730 is held in first basket 606, 706, mounting the convex mirror 712, 612 in a higher position relative to the base of the first chamber 602, 702 or relative to the top of the basket 606, 706 (e.g. as shown in FIG. 7 compared to FIG. 6) may enable a larger food area in the first cooking chamber 602, 702 to be imaged without light being blocked by the wall of the first basket 612, 712 (as illustrated by the solid arrow in FIG. 6).

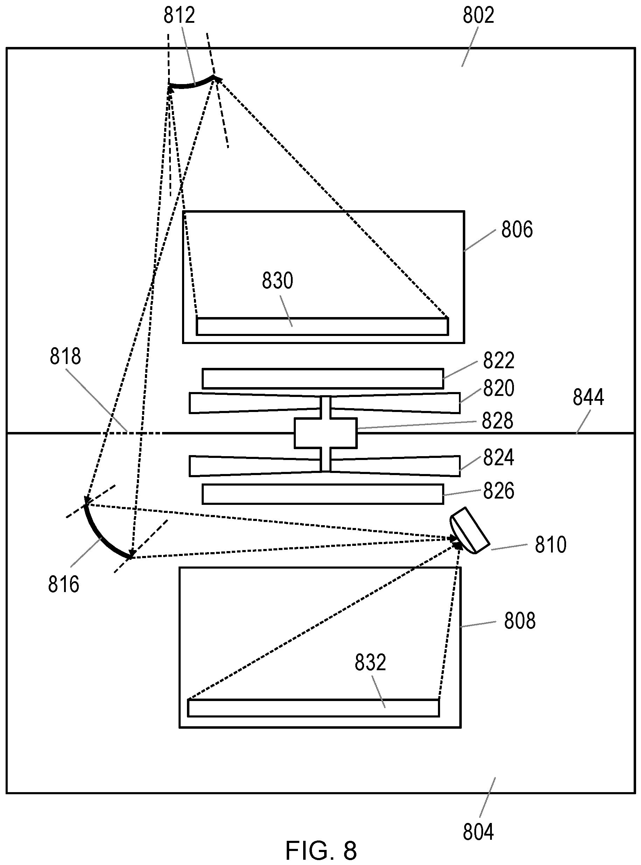

FIG. 8 illustrates a front view of a kitchen appliance for cooking, comprising the first cooking chamber 802, the second cooking chamber 804, the single camera 810, and the one or more optical components 812, 816. The first cooking chamber 802 may comprise the first basket 806 for holding food 830 and the second cooking chamber 804 may comprise the second basket 808 for holding food 832. The first and second cooking chambers 802, 804 may be separated by the dividing wall 844. Each cooking chamber 802, 804 may comprise a heating element 822, 826 and optionally also a fan 820, 824. The fans 820, 824 may be powered by a single motor 828 or by separate motors.

As illustrated in FIG. 8, the first cooking chamber 802 may be located above the second cooking chamber 804 and the one or more optical components may comprise a first mirror 812 and a second mirror 816. The first mirror may be arranged to direct light reflected from inside the first cooking chamber 802 to the second mirror 816. The second mirror 816 may be arranged to direct light reflected from the first mirror 812 to the single camera 810.

The single camera 810 may be oriented to view a food area inside the second cooking chamber 804 or, more specifically, inside the second basket 808. Thus, food 832 in the second basket 808 can be directly seen by the single camera 810. The single camera 810 is oriented such that most, if not all, of the food 832 can be observed. The dotted lines extending from the food 832 to the single camera 810 in FIG. 8 illustrate light that may be reflected from the food 832 and captured by the single camera 810. As illustrated in FIG. 8, all light reflected from the food 832 may be captured by the single camera 810.

The dotted lines extending from the food 830 to the first mirror 812, from the first mirror 812 to the second mirror 816, and from the second mirror 816 to the single camera 810 illustrate light reflected from the food 830 that is reflected by the first and second mirrors 812, 816 and captured by the single camera 810.

As illustrated in FIG. 8, the single camera 810 may be positioned inside the second cooking chamber 804. The first and second mirrors 812, 816 may be positioned in different cooking chambers. For example, as illustrated in FIG. 8, the first mirror 812 may be positioned in the first cooking chamber 802 and the second mirror 816 may be positioned in the second cooking chamber 804.

The first mirror 812 may be positioned above a food area for holding food 830 inside the first cooking chamber 802 such that at least a portion of the first mirror 812 is directly above the food area (for example, above a top edge of the first basket 806) and such that at least a portion of the first mirror 812 is not directly above the food area (for example, part of the first mirror overhangs the top edge of the first basket 806). The first mirror 812 may be positioned at an angle so as to reflect light reflected from inside the first cooking chamber 802 or, more specifically, the first basket 806 (for example, from food 830 inside the first basket 806) in a vertically downward direction.

The second mirror 816 may be positioned vertically below at least a portion of the first mirror 812 so as to receive light reflected in a vertically downward direction from the first mirror 812. Thus, the second mirror 816 may be positioned so that it is not directly vertically below the first basket 806 (for example, so that it is not directly vertically below a food area at which food 830 is to be placed in the first basket 806). As illustrated in FIG. 8, the first mirror 812 may be arranged to reflect light to the second mirror 816 such that an image of the food area inside the first cooking chamber (for example, an image of food 830) at the second mirror 816 is an inversion of the image at the first mirror 812. The second mirror 816 may be positioned at an angle so as to reflect light reflected from the first mirror 812 in a horizontal direction.

As illustrated in FIG. 8, the window 818 may allow light to pass from the first cooking chamber 802 to the second cooking chamber 804, e.g. without allowing air to escape. The window 818 allows light reflected from the first mirror 812 to reach the second mirror 816 so that the second mirror 816 may reflect this light to the single camera 810. As illustrated in FIG. 8, the window 818 may be positioned vertically below the first mirror 814 and vertically above the second mirror 816.

The single camera 810 may be positioned horizontally level with the second mirror 816 so as to receive light reflected in a horizontal direction from the second mirror 816. The single camera 810 may be positioned at an angle so as to be able to directly image a food area inside the second cooking chamber 804 (or, more specifically, a food area at which food 832 is to be placed inside the second basket 808) without the use of optical components to guide light to the single camera 810, while simultaneously "indirectly" imaging a food area in the first cooking chamber 802 (or, more specifically, a food area at which food 830 is to be placed inside the first basket 806) via the mirrors 812, 816.

As illustrated in FIG. 8, the first mirror 812 may be a convex mirror and the second mirror 816 may be a concave mirror.

The single camera 810 may be oriented at an angle in a range from -90 to - 180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 810 may be oriented at an angle of -150 degrees from the horizontal plane.

The mirror 812 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane. For example, the mirror 812 may be oriented at an angle of -70 degrees from the horizontal plane.

The mirror 816 may be oriented at an angle in a range from 0 to 90 degrees, such as at an angle in a range from 5 to 85 degrees from the horizontal plane, such as an angle in a range from 10 to 80 degrees from the horizontal plane, such as an angle in a range from 15 to 75 degrees from the horizontal plane, such as an angle in a range from 20 to 70 degrees from a horizontal plane, such as an angle in a range from 25 to 65 degrees from a horizontal plane, such as an angle in a range from 30 to 60 degrees from a horizontal plane, such as an angle in a range from 35 to 55 degrees from a horizontal plane. For example, the mirror 816 may be oriented at an angle of 45 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 826 and fan 824 are illustrated as being in the first heating arrangement and the heating element 822 and fan 820 are illustrated as being in the second heating arrangement in FIG. 8. However, it will be understood that heating element 826 and fan 824 may alternatively be in the second, third or fourth heating arrangement, and/or the heating element 822 and fan 820 may alternatively be in the first, third or fourth heating arrangement.

Thus, the architectures illustrated in FIGS. 6, 7 and 8 enable the single camera 610, 710, 810 to image food areas in both the first cooking chambers 602, 702, 802 and second cooking chambers 604, 704, 804 using one fewer optical component than the architecture illustrated in FIG. 5. For example, compared to the architecture in FIG. 5, it is possible to eliminate one flat mirror and only use a convex mirror 612, 712, 812 to directly reflect light from a food area at which food 630, 730, 830 is to be placed inside the first basket 606, 706, 806 in the architectures of FIGS. 6, 7 and 8.

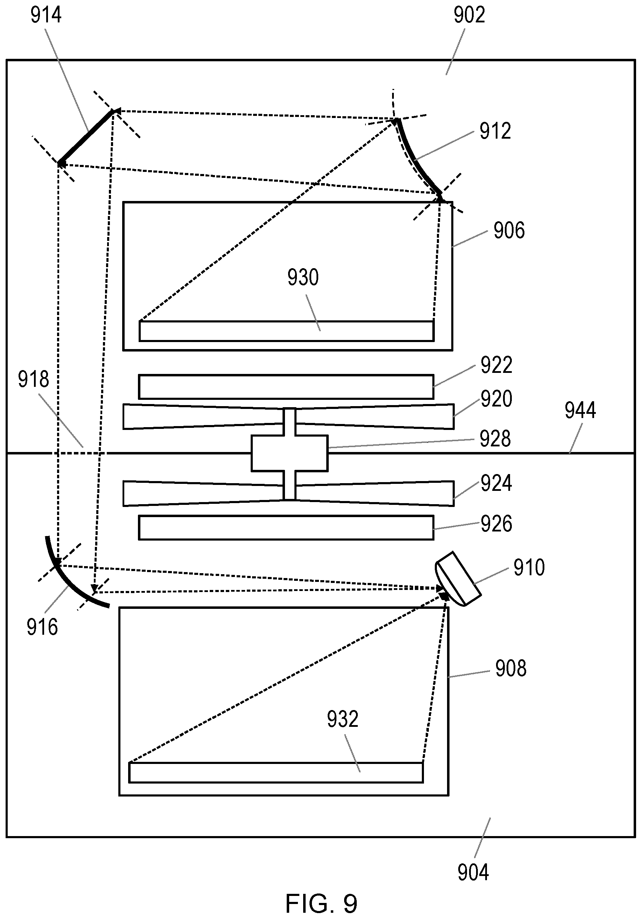

The architecture illustrated in FIG. 8 features a lower position of first mirror 812 than in the architecture illustrated in FIG. 7 (although the first mirror 812 may be at a higher position than in an architecture with three mirrors). In this case, a concave mirror may be used for the second mirror 816 to focus (or concentrate) the light reflected by the first mirror 812. In particular, if the image at the second mirror 816 is an inversion of the image at the first mirror 812 (i.e. if the light rays reflected from the first mirror 812 converge at a point in between the first mirror and the second mirror 816), the light rays may be divergent at the second mirror 816. Using a concave mirror for the second mirror 816 may converge, focus and/or concentrate the light rays reflected from the second mirror 816 on the camera 810. The use of a convex mirror for the second mirror 816 may enable a more compact kitchen appliance than the architecture illustrated in FIG. 7. Similarly, the use of three mirrors (such as in FIGS. 5 and 9) may enable a more compact kitchen appliance than an architecture that uses two mirrors (such as in FIGS. 6-8 and 10-11).

FIG. 9 illustrates a front view of a kitchen appliance for cooking, comprising the first cooking chamber 902, the second cooking chamber 904, the single camera 910, and the one or more optical components 912, 914, 916. The first cooking chamber 902 may comprise the first basket 906 for holding food 930 and the second cooking chamber 904 may comprise the second basket 908 for holding food 932. The first and second cooking chambers 902, 904 may be separated by the dividing wall 944. Each cooking chamber 902, 904 may comprise a heating element 922, 926 and optionally also a fan 920, 924. The fans 920, 924 may be powered by a single motor 928 or by separate motors.

The architecture illustrated in FIG. 9 is similar to that illustrated in FIG. 5 and thus the same description will be understood to apply, with the exception that the third mirror 916 is a concave mirror in the architecture illustrated in FIG. 9. Thus, in the architecture illustrated in FIG. 9, the first mirror 912 is a convex mirror, the second mirror 914 is a plane mirror, and the third mirror 916 is a concave mirror.

A concave mirror may be used for the third mirror 916 and/or the second mirror 914, for example, if the light rays reflected by the second mirror 914 are too divergent to (e.g. all) be sent to the single camera 910 using flat mirror(s).

Architectures with three mirrors, such as those illustrated in FIGS. 5 and 9, may enable the size of the kitchen appliance to be minimised.

The use of a concave mirror as the third mirror 916 may enable light to (e.g. all) be reflected into the camera without using a large flat mirror.

The single camera 910 may be oriented at an angle in a range from -90 to - 180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane, such as an angle in a range from -120 to -150 degrees from a horizontal plane, such as an angle in a range from -125 to -145 degrees from a horizontal plane, such as an angle in a range from -130 to -140 degrees from a horizontal plane. For example, the single camera 910 may be oriented at an angle of -135 degrees from the horizontal plane.

The mirror 912 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane, such as an angle in a range from -120 to -150 degrees from a horizontal plane, such as an angle in a range from -125 to -145 degrees from a horizontal plane, such as an angle in a range from -130 to -140 degrees from a horizontal plane. For example, the mirror 912 may be oriented at an angle of -135 degrees from the horizontal plane.

The mirror 914 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane, such as an angle in a range from -20 to -70 degrees from a horizontal plane, such as an angle in a range from -25 to -65 degrees from a horizontal plane, such as an angle in a range from -30 to -60 degrees from a horizontal plane, such as an angle in a range from -35 to -55 degrees from a horizontal plane. For example, the mirror 914 may be oriented at an angle of -45 degrees from the horizontal plane.

The mirror 916 may be oriented at an angle in a range from 0 to 90 degrees, such as at an angle in a range from 5 to 85 degrees from the horizontal plane, such as an angle in a range from 10 to 80 degrees from the horizontal plane, such as an angle in a range from 15 to 75 degrees from the horizontal plane, such as an angle in a range from 20 to 70 degrees from a horizontal plane, such as an angle in a range from 25 to 65 degrees from a horizontal plane, such as an angle in a range from 30 to 60 degrees from a horizontal plane, such as an angle in a range from 35 to 55 degrees from a horizontal plane. For example, the mirror 916 may be oriented at an angle of 45 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 926 and fan 924 are illustrated as being in the first heating arrangement and the heating element 922 and fan 920 are illustrated as being in the second heating arrangement in FIG. 9. However, it will be understood that the heating element 926 and fan 924 may alternatively be in the second, third or fourth heating arrangement, and/or the heating element 922 and fan 920 may alternatively be in the first, third or fourth heating arrangement.

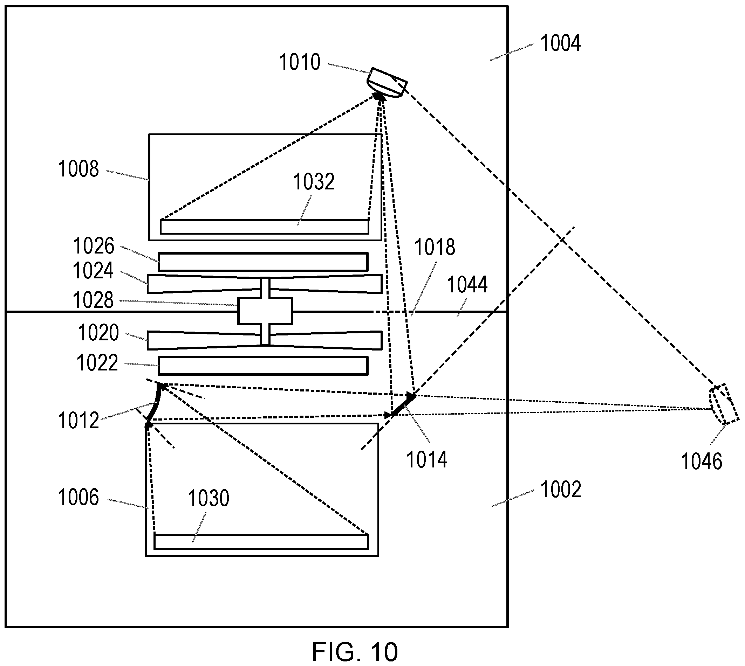

FIG. 10 illustrates a front view of a kitchen appliance for cooking, comprising the first cooking chamber 1002, the second cooking chamber 1004, the single camera 1010, and the one or more optical components 1012, 1014. The first cooking chamber 1002 may comprise the first basket 1006 for holding food 1030 and the second cooking chamber 1004 may comprise the second basket 1008 for holding food 1032. The first and second cooking chambers 1002, 1004 may be separated by the dividing wall 1044. Each cooking chamber 1002, 1004 may comprise a heating element 1022, 1026 and optionally also a fan 1020, 1024. The fans 1020, 1024 may be powered by a single motor 1028 or by separate motors.

As illustrated in FIG. 10, the first cooking chamber 1002 may be located below the second cooking chamber 1004. The one or more optical components may comprise a first mirror 1012 and a second mirror 1014. The first mirror 1012 may be arranged to direct the light reflected from inside the first cooking chamber 1002 to the second mirror 1014, the second mirror 1014 may be arranged to direct the light reflected from the first mirror 1012 to the single camera 1010, and the single camera 1010 may be arranged to image a food area inside the second cooking chamber 1004 that is within the field of view of the single camera 1010.

The single camera 1010 may be oriented to view a food area inside the second cooking chamber 1004 or, more specifically, inside the second basket 1008. Thus, food 1032 in the second basket 1008 can be directly seen by the single camera 1010. The single camera 1010 is oriented such that most, if not all, of the food 1032 can be observed. The dotted lines extending from the food 1032 to the single camera 1010 in FIG. 10 illustrate light that may be reflected from the food 1032 and captured by the single camera 1010. As illustrated in FIG. 10, all light reflected from the food 1032 may be captured by the single camera 1010.

The dotted lines extending from the food 1030 to the first mirror 1012, from the first mirror 1012 to the second mirror 1014, and from the second mirror 1014 to the single camera 1010 illustrate light reflected from the food 1030 that is reflected by the first and second mirrors 1012, 1014 and captured by the single camera 1010.

FIG. 10 shows a first virtual camera 1046. The first virtual camera 1046is based on the plane of the second mirror 1014. The first virtual camera 1046 illustrates the effective view that the single camera 1010 has of the first mirror 1012. As illustrated in FIG. 10, the plane of the second mirror 1014 may be perpendicular to the straight line between the first virtual camera 1046and the single camera 1010.

As illustrated in FIG. 10, the single camera 1010 may be positioned inside the second cooking chamber 1004. The mirrors 1012, 1014 may be positioned in the same cooking chamber. For example, as illustrated in FIG. 10, the first and second mirror 1012, 1014 may be positioned in the first cooking chamber 1002.

The first mirror 1012 may be positioned above a food area inside the first cooking chamber 1002 (or, more specifically, the first basket 1006), e.g. directly above a food area for holding food 1030 in the first basket 1006. The first mirror 1012 may be positioned at a top edge of the first basket 1006. The first mirror 1012 may be positioned at an angle so as to reflect light reflected from inside the first cooking chamber 1002 or, more specifically, the first basket 1006 (for example, from food 1030 inside the first basket 1006) in a horizontal direction.

The second mirror 1014 may be positioned horizontally from (e.g. horizontally level with) the first mirror 1012 so as to receive light reflected in a horizontal direction from the first mirror 1012. The second mirror 1014 may be positioned at an angle so as to reflect light reflected from the first mirror 1012 in a vertically upward direction.

As illustrated in FIG. 10, the window 1018 may allow light to pass from the first cooking chamber 1002 to the second cooking chamber 1004, e.g. without allowing air to escape. The window 1018 allows light reflected from the second mirror 1014 to reach the single camera 1010. As illustrated in FIG. 10, the window 1018 may be positioned vertically above the second mirror 1014.

The single camera 1010 may be positioned vertically above the second mirror 1014 so as to receive light reflected in a vertical direction from the second mirror 1014. The single camera 1010 may be positioned at an angle so as to be able to directly image a food area inside the second cooking chamber 1004 (or, more specifically, a food area at which food 1032 is to be placed inside the second basket 1008) without the use of optical components to guide light to the single camera 1010, while simultaneously "indirectly" imaging a food area in the first cooking chamber 1002 (or, more specifically, a food area at which food 1030 is to be placed inside the first basket 1006) via the mirrors 1012, 1014.

As illustrated in FIG. 10, the first mirror 1012 may be a convex mirror, and the second mirror 1014 may be a plane mirror.

As illustrated in FIG. 10, the light from the food area inside the second cooking chamber 1004 (e.g. the light from food 1032 in the second basket 1008) can be directly captured by the single camera 1010. The light from the food area in the first cooking chamber 1002 (e.g. the light from food 1030 in the first basket 1006) can be directed (or guided) into the single camera 1010 by the mirrors 1012, 1014. One advantage of this architecture is that, even if using only two mirrors, the kitchen appliance may still be compact. This is because the single camera 1010 is oriented towards the second cooking chamber 1004 (e.g. towards the second basket 1008) rather than away from it.

As illustrated in FIG. 10, the first mirror 1012 may be a convex mirror since there may not be much space between the heating element 1022 and the first basket 1006. The second mirror 1014 may either be a flat mirror (as illustrated) or a concave mirror.

The single camera 1010 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 1010 may be oriented at an angle of -120 degrees from the horizontal plane.

The mirror 1012 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane, such as an angle in a range from -20 to -70 degrees from a horizontal plane, such as an angle in a range from - 25 to -65 degrees from a horizontal plane. For example, the mirror 1012 may be oriented at an angle of -30 degrees from the horizontal plane.

The mirror 1014 may be oriented at an angle in a range from 90 to 180 degrees from a horizontal plane, such as at an angle in a range from 95 to 175 degrees from the horizontal plane, such as an angle in a range from 100 to 170 degrees from the horizontal plane, such as an angle in a range from 105 to 165 degrees from the horizontal plane, such as an angle in a range from 110 to 160 degrees from a horizontal plane, such as an angle in a range from 115 to 155 degrees from a horizontal plane, such as an angle in a range from 120 to 150 degrees from a horizontal plane, such as an angle in a range from 125 to 145 degrees from a horizontal plane, such as an angle in a range from 130 to 140 degrees from a horizontal plane. For example, the mirror 1014 may be oriented at an angle of 135 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 1022 and fan 1020 are illustrated as being in the first heating arrangement and the heating element 1026 and fan 1024 are illustrated as being in the second heating arrangement in FIG. 10. However, it will be understood that the heating element 1022 and fan 1020 may alternatively be in the second, third or fourth heating arrangement, and/or the heating element 1026 and fan 1024 may alternatively be in the first, third or fourth heating arrangement.

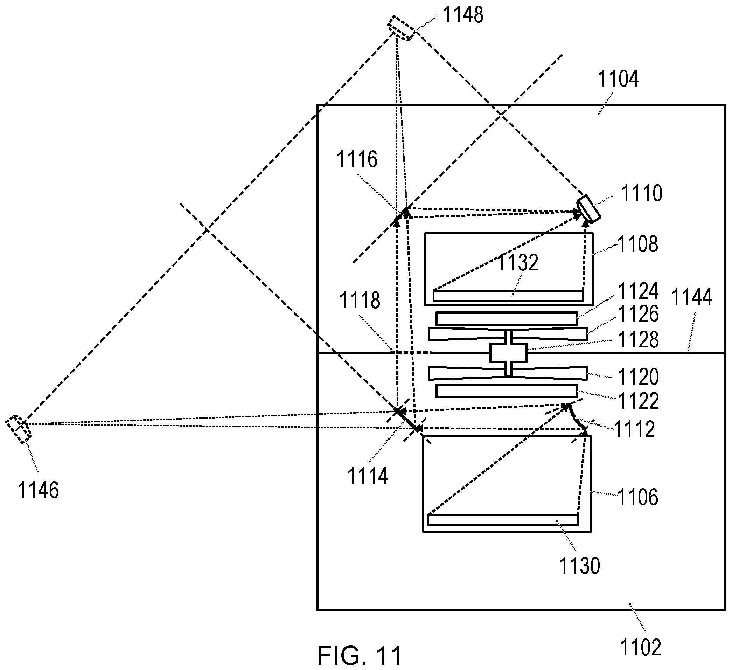

FIG. 11 illustrates a front view of a kitchen appliance for cooking, comprising the first cooking chamber 1102, the second cooking chamber 1104, the single camera 1110, and the one or more optical components 1112, 1114, 116. The first cooking chamber 1102 may comprise the first basket 1106 for holding food 1130 and the second cooking chamber 1104 may comprise the second basket 1108 for holding food 1132. The first and second cooking chambers 1102, 1104 may be separated by the dividing wall 1144. Each cooking chamber 1102, 1104 may comprise a heating element 1122, 1126 and optionally also a fan 1120, 1124. The fans 1120, 1124 may be powered by a single motor 1128 or by separate motors.

As illustrated in FIG. 11, the first cooking chamber 1102 may be located below the second cooking chamber 1104, and the one or more optical components may comprise a first mirror 1112, a second mirror 1112 and a third mirror 1116. The first mirror 1112 may be arranged to direct the light reflected from inside the first cooking chamber 1102 to the second mirror 1114, the second mirror 1114 may be arranged to direct the light reflected from the first mirror 1112 to the third mirror 1116, and the third mirror may be arranged to direct the light reflected from the second mirror 1114 to the single camera 1110. The single camera may be arranged to image a food area inside the second cooking chamber 1104 that is within the field of view of the single camera 1110.

The single camera 1110 may be oriented to view a food area inside the second cooking chamber 1104 or, more specifically, inside the second basket 1108. Thus, food 1132 in the second basket 1108 can be directly seen by the single camera 1110. The single camera 1110 is oriented such that most, if not all, of the food 1132 can be observed. The dotted lines extending from the food 1132 to the single camera 1110 in FIG. 11 illustrate light that may be reflected from the food 1132 and captured by the single camera 1110. As illustrated in FIG. 11, all light reflected from the food 1132 may be captured by the single camera 1110.

The dotted lines extending from the food 1130 to the first mirror 1112, from the first mirror 1112 to the second mirror 1114, from the second mirror 1114 to the third mirror 1116, and from the second mirror 1116 to the single camera 1110 illustrate light reflected from the food 1130 that is reflected by the first, second, and third mirrors 1112, 1114, 1116 and captured by the single camera, 1110.

FIG. 11 shows a first virtual camera 1146 and a second virtual camera 1148. The first virtual camera 1146is based on the plane of the second mirror 1114. The first virtual camera 1146 illustrates the effective view that the single camera 1110 has of the first mirror 1112. The second virtual camera 1148is based on the plane of the third mirror 1116. The second virtual camera 1148 illustrates the effective view that the single camera 1110 has of the second mirror 1114. As illustrated in FIG. 11, the plane of the second mirror 1114 may be perpendicular to the straight line between the first virtual camera 1146and the second virtual camera 1148. The plane of the third mirror 1116 may be perpendicular to the straight line between the second virtual camera 1148and the single camera 1110.

As illustrated in FIG. 11, the single camera 1110 may be positioned inside the second cooking chamber 1104. The mirrors 1112, 1114, 1116 may be positioned inside different cooking chambers. For example, as illustrated in FIG. 11, the first mirror 1112 and the second mirror 1114 may be positioned in the first cooking chamber 1102 and the third optical mirror 1116 may be positioned in the second cooking chamber 1104.

The first mirror 1112 may be positioned above a food area inside the first cooking chamber 1102 (or, more specifically, the first basket 1106), e.g. directly above a food area for holding the food 1130 in the first basket 1106. The first mirror 1112 may be positioned at a top edge of the first basket 1106. The first mirror 1112 may be positioned at an angle so as to reflect light reflected from inside the first cooking chamber 1102 or, more specifically, the first basket 1106 (for example, from food 1130 inside the first basket 1106) in a horizontal direction.

The second mirror 1114 may be positioned horizontally from (e.g. horizontally level with) the first mirror 1112 so as to receive light reflected in a horizontal direction from the first mirror 1112. The second mirror 1114 may be positioned at an angle so as to reflect light reflected from the first mirror 1112 in a vertically upward direction.

As illustrated in FIG. 11, the window 1118 may allow light to pass from the first cooking chamber 1102 to the second cooking chamber 1104, e.g. without allowing air to escape. The window 1118 allows light reflected from the second mirror 1114 to reach the third mirror 1116. As illustrated in FIG. 11, the window 1118 may be positioned vertically above the second mirror 1114 and vertically below the third mirror 1116.

The third mirror 1116 may be positioned vertically above the second mirror 1114 so as to receive light reflected in a vertically upward direction from the second mirror 1114. Thus, the third mirror 1116 may be positioned so that it is not directly vertically above the second basket 1108 (for example, so that it is not directly vertically above a food area at which food 1132 is to be placed in the second basket 1108). The third mirror 1116 may be positioned at an angle so as to reflect light received from the second mirror 1114 in a horizontal direction

The single camera 110 may be positioned horizontally level with the third mirror 1116 so as to receive light reflected in a horizontal direction from the third mirror 1116. The single camera may be positioned at an angle so as to be able to directly image a food area inside the second cooking chamber 1104 (or, more specifically, a food area at which food 1132 is to be placed inside the second basket 1108) without the use of optical components to guide light to the single camera 1110, while simultaneously "indirectly" imaging a food area in the first cooking chamber 1102 (or, more specifically, a food area at which food 1030 is to be placed inside the first basket 1006) via the mirrors 1112, 1114, 1116.

As illustrated in FIG. 11, the first mirror 1112 may be a convex mirror, the second mirror 1114 may be a plane mirror, and the third mirror 1116 may be a plane mirror.

FIG. 11 illustrates an architecture that uses three mirrors 1112, 1114, 1116. An advantage of using three mirrors may be that the kitchen appliance can be more compact than using two mirrors. For example, in the architecture illustrated in FIG. 11, minimal or no space is required between the single camera 1110 and the top edge of the second basket 1108.

The single camera 1110 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 1110 may be oriented at an angle of -150 degrees from the horizontal plane.

The mirror 1112 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane, such as an angle in a range from -120 to -150 degrees from a horizontal plane, such as an angle in a range from -125 to -145 degrees from a horizontal plane, such as an angle in a range from -130 to -140 degrees from a horizontal plane. For example, the mirror 1112 may be oriented at an angle of -135 degrees from the horizontal plane.

The mirror 1114 may be oriented at an angle in a range from 0 to 90 degrees, such as at an angle in a range from 5 to 85 degrees from the horizontal plane, such as an angle in a range from 10 to 80 degrees from the horizontal plane, such as an angle in a range from 15 to 75 degrees from the horizontal plane, such as an angle in a range from 20 to 70 degrees from a horizontal plane, such as an angle in a range from 25 to 65 degrees from a horizontal plane, such as an angle in a range from 30 to 60 degrees from a horizontal plane, such as an angle in a range from 35 to 55 degrees from a horizontal plane, such as an angle in a range from 40 to 50 degrees from a horizontal plane. For example, the mirror 1114 may be oriented at an angle of 45 degrees from the horizontal plane.

The mirror 1116 may be oriented at an angle in a range from 0 to -90 degrees, such as at an angle in a range from -5 to -85 degrees from the horizontal plane, such as an angle in a range from -10 to -80 degrees from the horizontal plane, such as an angle in a range from -15 to -75 degrees from the horizontal plane, such as an angle in a range from -20 to -70 degrees from a horizontal plane, such as an angle in a range from - 25 to -65 degrees from a horizontal plane, such as an angle in a range from -30 to -60 degrees from a horizontal plane, such as an angle in a range from -35 to -55 degrees from a horizontal plane, such as an angle in a range from -40 to -50 degrees from a horizontal plane. For example, the mirror 1116 may be oriented at an angle of -45 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 1122 and fan 1120 are illustrated as being in the first heating arrangement and the heating element 1126 and fan 1124 are illustrated as being in the second heating arrangement in FIG. 11. However, it will be understood that the heating element 1122 and fan 1120 may alternatively be in the second, third or fourth heating arrangement, and/or the heating element 1126 and fan 1124 may alternatively be in the first, third or fourth heating arrangement.

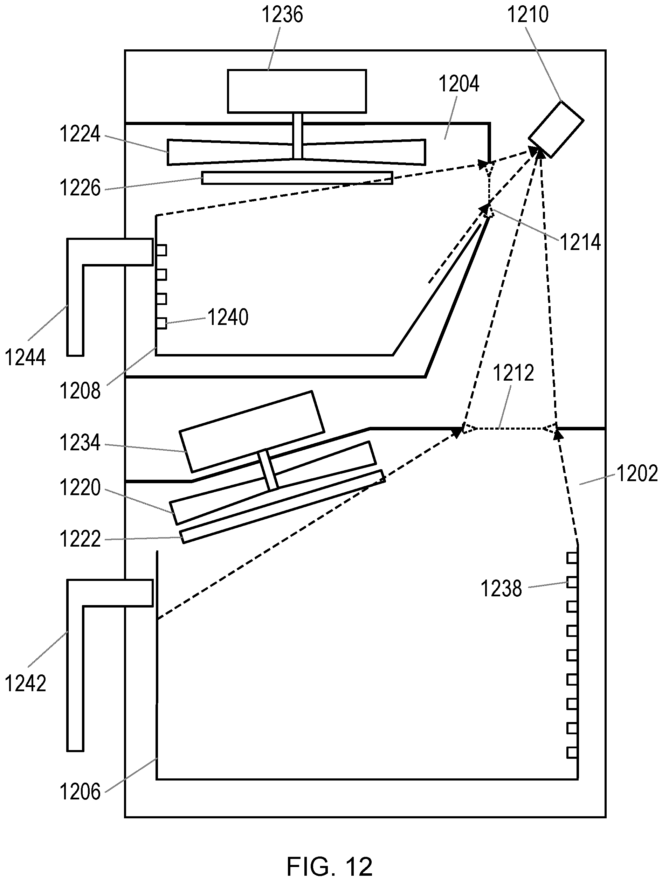

FIG. 12 illustrates a side view of a kitchen appliance for cooking, comprising the first cooking chamber 1202, the second cooking chamber 1204, the single camera 1210, and the one or more optical components 1212, 1214. As illustrated in FIG. 12, the first cooking chamber 1202 may be located below the second cooking chamber 1202. The first cooking chamber 1202 may comprise the first basket 1206 for holding food 1230 and the second cooking chamber 1204 may comprise the second basket 1208 for holding food 1232. Each cooking chamber 1202, 1204 may comprise a heating element 1222, 1226 and optionally also a fan 1220, 1224. The fans 1220, 1224 may be powered by separate motors 1234, 1236. The first and second baskets 1206, 1208 may comprise fill level markers 1238, 1240. The first and second baskets 1206, 1208 may comprise handles 1244, 1242.As illustrated in FIG. 12, the first and second baskets 1206, 1208 may be different sizes. For example, as illustrated in FIG. 12, the first basket 1206 may be larger than the second basket 1208.

The first and second baskets 1206, 1208 may be shaped so as to maximise a view of the single camera 1210. For example, at least a portion of the side of the second basket 1208 may be sloped. A single camera 1210 mounted near the top of the first cooking chamber 1210 may be able to see into the second basket 1208 through a window (e.g. a glass window) in the wall of the second basket 1208 and into the first basket 1206 through a window (e.g. a glass window) in the top of the first cooking chamber 1202.

However, in such an architecture, due to the position of a portion of the second cooking chamber 1204 between the single camera 1210 and the first cooking chamber 1202, one side (left side in the figure) of the first basket 1206 may not be fully within the field of view of the camera 1210. One solution is to use mirrors to guide light, such as in the architectures depicted in FIGS. 3-11. Another solution is to replace the windows with lenses or, more specifically, concave lenses 1212, 1214.

Thus, as illustrated in FIG. 12, the one or more optical components may comprise a first concave lens 1212 and a second concave lens 1214. The first concave lens 1212 may be arranged to direct the light reflected from inside the first cooking chamber 1202 (or, more specifically, the inside of the first basket 1206) to the single camera 1210 for the single camera to image a food area inside the first cooking chamber 1202 (or, more specifically, the inside of the first basket 1206) that is outside the field of view of the single camera 1210. The second concave lens 1214 may be arranged to direct the light reflected from inside the second cooking chamber 1204 (or, more specifically, the inside of the second basket 1208) to the single camera 1210. The second concave lens may be arranged to direct the light reflected from inside the second cooking chamber 1204 (or, more specifically, the inside of the second basket 1208) to the single camera 1210 for the single camera to image a food area inside the second cooking chamber 1204 that is outside the field of view of the single camera 1210.

The concave lenses 1212, 1214 can be used to direct light from food areas inside the first and second baskets 1206, 1208 to the single camera 1210. The light path can be lengthened in this way to thereby enable light reflected from the food areas (e.g. from a larger portion of the food areas or the entire food areas) to reach the single camera 1210. The second basket 1208 may use a (e.g. glass) window rather than the concave lens 1214 if, for example, the entire food area on which food can be placed in the second basket 1208 is already within the field of view of the camera.

The dotted lines extending from the first basket 1206 to the first concave lens 1212 and from the first concave lens 1212 to the single camera 1210 represent light that is directed from inside the first cooking chamber 1202 (or, more specifically, the first basket 1206) to the single camera 1210. The dotted lines extending from the second basket 1208 to the second concave lens 1214 and from the second concave lens 1214 to the single camera 1210 represent light that is directed from inside the second cooking chamber 1204 (or, more specifically, the second basket 1208) to the single camera 1210.

The single camera 1210 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 1210 may be oriented at an angle of -120 degrees from the horizontal plane.

The lens 1212 may be oriented at an angle in a range from 30 to 90 degrees from a horizontal plane, such as at an angle in a range from 35 to 85 degrees from the horizontal plane. For example, the lens 1212 may be oriented at an angle of 80 degrees from the horizontal plane. The lens 1214 may be oriented at an angle in a range from 0 to 90 degrees, such as at an angle in a range from 5 to 85 degrees from the horizontal plane. For example, the lens 1214 may be oriented at an angle of 10 degrees from the horizontal plane.

The horizontal plane can be defined as a plane parallel to the base of the kitchen appliance. The angles of orientation can be measured counterclockwise from a starting angle of 0 degrees from the horizontal plane.

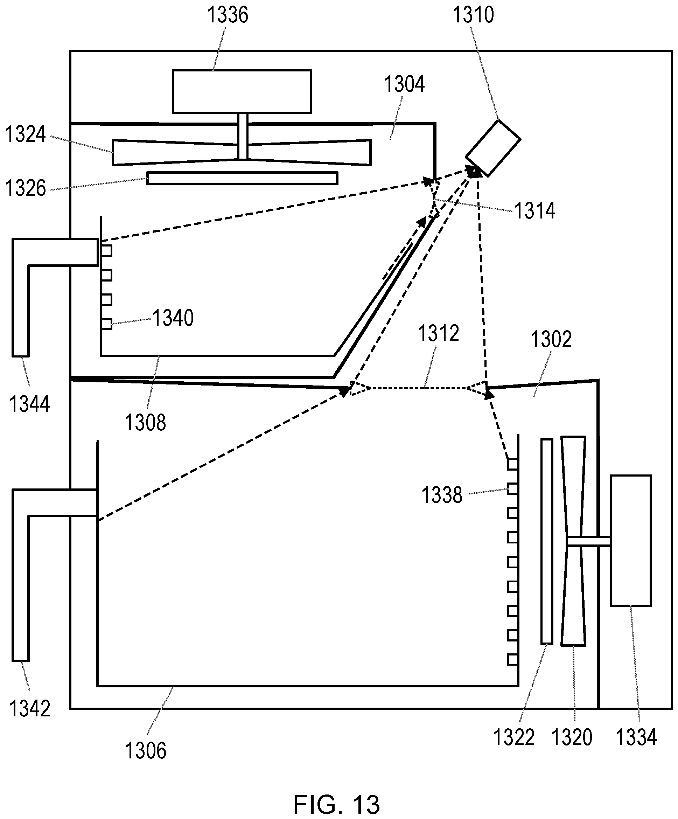

In the architecture illustrated in FIG. 12, the sizes of the fan 1220 and heating element 1222 in the first and/or second cooking chambers 1202 may be limited in order to allow light from the inside the cooking chambers to reach the concave lenses 1214, 1212. As illustrated in FIG. 12, mounting the fan 1220, heater 1222, and motor 1234 at an angle relative to the side wall of the kitchen appliance (i.e. having a tilted arrangement for the fan 1220, heater 1222 and motor 1234) may at least partially resolve this. For example, the fan 1220, heater 1222, and motor 1234 may be attached to a part of a top of the first cooking chamber 1202, which is sloped relative to the side of the first cooking chamber 1202. Alternatively, the fan 1220, heater 1222, and motor 1234 may be mounted toward the back of the kitchen appliance, such as on a back side of the first cooking chamber 1202, such as in the architecture shown in FIG. 13. Alternatively, the fan 1220, heater 1222, and motor 1234 may be mounted toward the bottom of the kitchen appliance, such as on the base of the first cooking chamber 1202 (not illustrated).

The heating elements 1222, 1226 and fans 1220, 1224 are illustrated as being in the first heating arrangement in FIG. 12. However, it will be understood that one or both of the heating elements 1222, 1226 and corresponding fans 1220, 1224 may alternatively be in the second, third or fourth heating arrangement.

FIG. 13 illustrates a side view of a kitchen appliance for cooking, comprising the first cooking chamber 1302, the second cooking chamber 1304, the single camera 1310, and the one or more optical components 1312, 1314. As illustrated in FIG. 13, the first cooking chamber 1302 may be located below the second cooking chamber 1302. The first cooking chamber 1302 may comprise the first basket 1306 for holding food 1330 and the second cooking chamber 1304 may comprise the second basket 1308 for holding food 1332. Each cooking chamber 1302, 1304 may comprise a heating element 1322, 1326 and optionally also a fan 1320, 1324. The fans 1320, 1324 may be powered by separate motors 1334, 1336. The first and second baskets 1306, 1308 may include fill level markers 1338, 1340.

FIG. 13 illustrates a similar architecture to FIG. 12 and thus the same description will be understood to apply, except that, in FIG. 13, the fan 1320, heater 1322, and motor 1234 for the first cooking chamber 1302 are positioned on a side of the first cooking chamber 1302 (rather than at a top of the first cooking chamber 1202 as in FIG. 12). More specifically, in FIG. 13, the fan 1320, heater 1322, and motor 1234 are mounted toward the back of the kitchen appliance, such as on a back side of the first cooking chamber 1202.

The single camera 1310 may be oriented at an angle in a range from -90 to -180 degrees from a horizontal plane, such as at an angle in a range from -95 to -175 degrees from the horizontal plane, such as an angle in a range from -100 to -170 degrees from the horizontal plane, such as an angle in a range from -105 to -165 degrees from the horizontal plane, such as an angle in a range from -110 to -160 degrees from a horizontal plane, such as an angle in a range from -115 to -155 degrees from a horizontal plane. For example, the single camera 1310 may be oriented at an angle of -120 degrees from the horizontal plane.

The lens 1312 may be oriented at an angle in a range from 30 to 90 degrees from a horizontal plane, such as at an angle in a range from 35 to 85 degrees from the horizontal plane. For example, the lens 1312 may be oriented at an angle of 90 degrees from the horizontal plane. The lens 1314 may be oriented at an angle in a range from 0 to 90 degrees, such as at an angle in a range from 5 to 85 degrees from the horizontal plane. For example, the lens 1314 may be oriented at an angle of 10 degrees from the horizontal plane.

The horizontal plane can be defined as a plane parallel to the base of the kitchen appliance. The angles of orientation can be measured counterclockwise from a starting angle of 0 degrees from the horizontal plane.

The heating element 1326 and fan 1324 are illustrated as being in the first heating arrangement and the heating element 1322 and fan 1320 are illustrated as being in the third heating arrangement in FIG. 13. However, it will be understood that the heating element 1326 and fan 1324 may alternatively be in the second, third or fourth heating arrangement, and/or the heating element 1322 and fan 1320 may alternatively be in the first, second or fourth heating.

There is thus provided an improved kitchen appliance for cooking. The improvement arises from using an optical arrangement (e.g. comprising one or more mirrors and/or one or more lens) to guide light from food in one or more cooking chambers (or one or more baskets) into a single camera, e.g. at the same time and/or during cooking. Thus, by integrating one or more optical components into a kitchen appliance for cooking, it is possible for a single camera to see food in multiple cooking chambers (e.g. in multiple baskets) at the same time. The improvement can be applied to both horizontal and vertical arrangements of kitchen appliance.

Variations to the disclosed embodiments can be understood and effected by those skilled in the art in practicing the principles and techniques described herein, from a study of the drawings, the disclosure and the appended claims. **In** the claims, the word "comprising" does not exclude other elements or steps, and the indefinite article "a" or "an" does not exclude a plurality. The terms "comprise" and "include" as used in this text will be understood by a person skilled in the art as covering the term "consist of". Hence, the term "comprise" or "include" may in respect of an embodiment mean "consist of", but may in another embodiment mean "contain/have/be equipped with at least the defined species and optionally one or more other species".

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale. Any reference signs in the claims should not be construed as limiting the scope.

## Claims

1. **A kitchen** appliance for cooking, comprising:
a first cooking chamber (202, 302, 502, 602, 702, 802, 902, 1002, 1102, 1202, 1302) for holding food;
a second cooking chamber (204, 304, 504, 604, 704, 804, 904, 1004, 1104, 1204, 1304) for holding food;
a controller configured to control cooking processes for cooking food in the first cooking chamber (202, 302, 502, 602, 702, 802, 902, 1002, 1102, 1202, 1302) and the second cooking chamber (204, 304, 504, 604, 704, 804, 904, 1004, 1104, 1204, 1304) separately;
a single camera (210, 310, 510, 610, 710, 810, 910, 1010, 1110, 1210, 1310) for imaging inside the first cooking chamber (202, 302, 502, 602, 702, 802, 902, 1002, 1102, 1202, 1302) and inside the second cooking chamber (204, 304, 504, 604, 704, 804, 904, 1004, 1104, 1204, 1304); and
one or more optical components (212, 312, 512, 514, 516, 612, 616, 712, 716, 812, 816, 912, 914, 916, 1012, 1014, 1112, 1114, 1116, 1212, 1214, 1312, 1314) arranged to direct light reflected from inside the first cooking chamber (202, 302, 502, 602, 702, 802, 902, 1002, **1102,** 1202, 1302) to the single camera (210, 310, 510, 610, 710, 810, 910, 1010, 1110, 1210, 1310) for the single camera to image a food area inside the first cooking chamber (202, 302, 502, 602, 702, 802, 902, 1002, 1102, 1202, 1302) that is outside a field of view of the single camera (210, 310, 510, 610, 710, 810, 910, 1010, 1110, 1210, 1310).

2. The kitchen appliance as claimed in claim 1, wherein:
the one or more optical components comprise an optical component (212, 312, 512, 612, 712, 812, 912, 1012, 1112, 1212, 1312) having a curved surface that is arranged to direct the light reflected from inside the first cooking chamber (202, 302, 502, 602, 702, 802, 902, 1002, 1102, 1202, 1302) to the single camera (210, 310, 510, 610, 710, 810, 910, 1010, 1110, 1210, 1310); and
the optical component having the curved surface is the first optical component in the path of the light reflected from inside the first cooking chamber (202, 302, 502, 602, 702, 802, 902, 1002, 1102, 1202, 1302).

3. The kitchen appliance as claimed in claim 1 or 2, wherein:
the first cooking chamber (202) is located next to the second cooking chamber (204); and
the one or more optical components comprise a concave mirror (212) arranged to:
direct the light reflected from inside the first cooking chamber (202) to the single camera (210); and
direct light reflected from inside the second cooking chamber (204) to the single camera (210) for the single camera to image a food area inside the second cooking chamber (204) that is outside the field of view of the single camera (210).

4. The kitchen appliance as claimed in claim 1 or 2, wherein:
the first cooking chamber (302) is located next to the second cooking chamber (304); the one or more optical components comprise a convex mirror (312) arranged to direct the light reflected from inside the first cooking chamber (302) to the single camera (310); and
the single camera (310) is arranged to image a food area inside the second cooking chamber (304) that is within the field of view of the single camera (310).

5. The kitchen appliance as claimed in claim 1 or 2, wherein:
the first cooking chamber (502, 902) is located above the second cooking chamber (504, 904);
the one or more optical components comprise a first mirror (512, 912), a second mirror (514, 914), and a third mirror (516, 916);
the first mirror (512, 912) is arranged to direct the light reflected from inside the first cooking chamber (502, 902) to the second mirror (514, 914);
the second mirror (514, 914) is arranged to direct the light reflected from the first mirror (512, 912) to the third mirror (516, 916);
the third mirror (516, 916) is arranged to direct the light reflected from the second mirror (514, 914) to the single camera (510, 910); and
the single camera (510, 910) is arranged to image a food area inside the second cooking chamber (504, 904) that is within the field of view of the single camera (510, 910).

6. The kitchen appliance as claimed in claim 5, wherein:
the first mirror (512) is a convex mirror, the second mirror (514) is a plane mirror, and the third mirror (516) is a plane mirror; or
the first mirror (912) is a convex mirror, the second mirror (914) is a plane mirror, and the third mirror (916) is a concave mirror.

7. The kitchen appliance as claimed in claim 1 or 2, wherein:
the first cooking chamber (602, 702, 802) is located above the second cooking chamber (604, 704, 804);
the one or more optical components comprise a first mirror (612, 712, 812) and a second mirror (616, 716, 816);
the first mirror (612, 712, 812) is arranged to direct the light reflected from inside the first cooking chamber (602, 702, 802) to the second mirror (616, 716, 816);
the second mirror (616, 716, 816) is arranged to direct the light reflected from the first mirror (612, 712, 812) to the single camera (610, 710, 810); and
the single camera (610, 710, 810) is arranged to image a food area inside the second cooking chamber (604, 704, 804) that is within the field of view of the single camera (610, 710, 810).

8. The kitchen appliance as claimed in claim 7, wherein:
the first mirror (612, 712) is a convex mirror, and the second mirror (616, 716) is a plane mirror; or
the first mirror (812) is a convex mirror, and the second mirror (816) is a concave mirror.

9. The kitchen appliance as claimed in claim 1 or 2, wherein:
the first cooking chamber (1002) is located below the second cooking chamber (1004);
the one or more optical components comprise a first mirror (1012) and a second mirror (1014);
the first mirror (1012) is arranged to direct the light reflected from inside the first cooking chamber (1002) to the second mirror (1014);
the second mirror (1014) is arranged to direct the light reflected from the first mirror (1012) to the single camera (1010); and
the single camera (1010) is arranged to image a food area inside the second cooking chamber (1004) that is within the field of view of the single camera (1010).

10. The kitchen appliance as claimed in claim 9, wherein:
the first mirror (1012) is a convex mirror, and the second mirror (1014) is a plane mirror.

11. The kitchen appliance as claimed in claim 1 or 2, wherein:
the first cooking chamber (1102) is located below the second cooking chamber (1104);
the one or more optical components comprise a first mirror (1112), a second mirror (1114), and a third mirror (1116);
the first mirror (1112) is arranged to direct the light reflected from inside the first cooking chamber (1102) to the second mirror (1114);
the second mirror (1114) is arranged to direct the light reflected from the first mirror (1112) to the third mirror (1116);
the third mirror (1116) is arranged to direct the light reflected from the second mirror (1114) to the single camera (1110); and
the single camera (1110) is arranged to image a food area inside the second cooking chamber (1104) that is within the field of view of the single camera (1110).

12. The kitchen appliance as claimed in claim 11, wherein:
the first mirror (1112) is a convex mirror, the second mirror (1114) is a plane mirror, and the third mirror (1116) is a plane mirror.

13. The kitchen appliance as claimed in claim 1 or 2, wherein:
the first cooking chamber (1202, 1302) is located below the second cooking chamber (1204, 1304);
the one or more optical components comprise a first concave lens (1212, 1312) and a second concave lens (1214, 1314);
the first concave lens (1212, 1312) is arranged to direct the light reflected from inside the first cooking chamber (1202, 1302) to the single camera (1210, 1310); and
the second concave lens (1214, 1314) is arranged to direct the light reflected from inside the second cooking chamber (1204, 1304) to the single camera (1210, 1310) for the single camera to image a food area inside the second cooking chamber (1204, 1304) that is outside the field of view of the single camera (1210, 1310).

14. The kitchen appliance as claimed in any of the preceding claims, wherein:
the first cooking chamber (202, 302, 502, 602, 702, 802, 902, 1002, **1102,** 1202, 1302) comprises a first removable basket (206, 306, 506, 606, 706, 806, 906, 1006, 1106, 1206, 1306) for holding food;
the second cooking chamber (204, 304, 504, 604, 704, 804, 904, 1004, **1104,** 1204, 1304) comprises a second removable basket (208, 308, 508, 608, 708, 808, 908, 1008, 1108, 1208, 1308) for holding food;
the single camera (210, 310, 510, 610, 710, 810, 910, 1010, 1110, 1210, 1310) is for imaging inside the first removable basket (206, 306, 506, 606, 706, 806, 906, 1006, 1106, 1206, 1306) and inside the second removable basket (208, 308, 508, 608, 708, 808, 908, 1008, 1108, 1208, 1308); and
the one or more optical components (212, 312, 512, 514, 516, 612, 616, 712, 716, 812, 816, 912, 914, 916, 1012, 1014, 1112, 1114, 1116, 1212, 1214, 1312, 1314) are arranged to direct light reflected from inside the first removable basket (206, 306, 506, 606, 706, 806, 906, 1006, 1106, 1206, 1306) to the single camera (210, 310, 510, 610, 710, 810, 910, 1010, 1110, 1210, 1310) for the single camera to image inside the first removable basket (206, 306, 506, 606, 706, 806, 906, 1006, 1106, 1206, 1306).

15. The kitchen appliance as claimed in any of the preceding claims, wherein:
the kitchen appliance is an air-frying cooker, a microwave oven, a conventional oven, a convection oven, or a steaming cooker.
